# EUROPÄISCHE PATENTSCHRIFT

(11) **EP 2 689 888 B1**
(45) Veröffentlichungstag und Bekanntmachung des Hinweises auf die Patenterteilung: **09.11.2016**
(21) Anmeldenummer: 13178213.8
(22) Anmeldetag: 26.07.2013
(51) Int. Cl.: B23Q 3/155, B23Q 3/157

(54) **WERKZEUGMAGAZIN**
TOOL MAGAZIN
MAGASIN À OUTILS

(30) Priorität: 26.07.2012 DE 102012213207
(43) Veröffentlichungstag der Anmeldung: 29.01.2014
(73) Patentinhaber: DECKEL MAHO Pfronten GmbH, 87459 Pfronten (DE)
(72) Erfinder: Lechleiter, Karl, 87466 Oy-Mittelberg (DE); Mayr, Matthias, 87629 Füssen Weißensee (DE); Trenkle, Michael, 87459 Pfronten (DE)
(74) Vertreter: MERH-IP Matias Erny Reichl Hoffmann Patentanwälte PartG mbB

(56) Entgegenhaltungen:
- DE-C1- 4 330 853
- JP-A- 2005 028 549
- KR-B1- 100 761 192
- US-A1- 2011 245 053

## Beschreibung

Die vorliegende Erfindung betrifft einen Werkzeugmagazin mit einer Entriegelungseinrichtung zum Entriegeln eines in einem Werkzeugköcher aufgenommenen und verriegelten Werkzeugkegels.

Im allgemeinen Stand der Technik sind Werkzeugmagazine zum Aufnehmen einer Mehrzahl von Werkzeugen an einer Werkzeugmaschine bekannt, an denen Werkzeug haltende Werkzeugkegel wie z.B. Hohlschaftkegel oder Steilkegel in jeweiligen am Werkzeugmagazin angebrachten Werkzeugköchern aufgenommen sind. Hierbei ist es erforderlich, die Werkzeugkegel in den Werkzeugköchern zu verriegeln und zum Ent- bzw. Beladen des Werkzeugmagazins zu entriegeln.

Bekannte Verriegelungsmechanismen sind hierbei derart ausgebildet, dass ein Verriegelungsgreifabschnitt die Werkzeugkegel vorne an der Greiferrille verriegelt. Hierbei tritt das Problem auf, dass an der Greiferrille der Werkzeugkegel auch Werkzeugwechslergreifer und Belade- bzw. Entladegreifer eingreifen, um das entriegelte Werkzeug bzw. den entriegelten Werkzeugkegel aus dem Werkzeugköcher zu entnehmen. Derartige Verriegelungsmechanismen erschweren bzw. verzögern das Be-/Entladen des Werkzeugmagazins bzw. die Durchführung von Werkzeugwechseln.

Es ist eine Aufgabe der vorliegenden Erfindung einen Verriegelungsmechanismus zum Ver- bzw. Entriegeln von Werkzeugkegeln in einem Werkzeugköcher eines Werkzeugmagazins dahingehend zu verbessern, dass das Entriegeln bzw. Verriegeln des Werkzeugkegels auf einfache Weise, schnell und sicher ermöglicht wird und mit einfachen Mitteln ein effizientes Be- und Entladen des Werkzeugmagazins bzw. effiziente Werkzeugwechsel ermöglicht.

Die Druckschriften KR 100 761192 B1 und JP 2005-028549 A betreffen Werkzeugköcher zum Aufnehmen und Verriegeln von Werkzeugkegeln an einem Werkzeugmagazin einer Werkzeugmaschine mit einem Aufnahmemittel zur Aufnahme des Werkzeugkegels, einem Verriegelungsmittel zur Verriegelung des in dem Aufnahmemittel aufgenommenen Werkzeugkegels und einem Befestigungsmittel zur Befestigung des Werkzeugköchers an dem Werkzeugmagazin. Das Verriegelungsmittel umfasst ein in axialer Richtung bewegliches Element, das dazu eingerichtet ist, aus einer ersten Position in axialer Richtung in eine zweite Position bewegt zu werden, wobei ein in dem Aufnahmemittel aufgenommener Werkzeugkegel verriegelt ist, wenn das Element sich in der ersten Position befindet, und der in dem Aufnahmemittel aufgenommene Werkzeugkegel entriegelt ist, wenn das Element sich in der zweiten Position befindet.

Im Hinblick auf die vorstehend genannte Aufgabe der vorliegenden Erfindung wird erfindungsgemäß ein Werkzeugmagazin für eine Werkzeugmaschine nach Anspruch 1 vorgeschlagen. Abhängige Ansprüche betreffen bevorzugte Ausführungsformen der vorliegenden Erfindung.

Ein beispielhafter Werkzeugköcher zum Aufnehmen und Verriegeln eines Werkzeugkegels an einem Werkzeugmagazin umfasst ein Aufnahmemittel zur Aufnahme des Werkzeugkegels in axialer Richtung des Werkzeugköchers auf einer ersten Seite des Werkzeugköchers, ein Verriegelungsmittel zur Verriegelung des in dem Aufnahmemittel aufgenommenen Werkzeugkegels und ein erstes Befestigungsmittel zur Befestigung des Werkzeugköchers an dem Werkzeugmagazin.

Das Verriegelungsmittel umfasst ein in axialer Richtung bewegliches erstes Anzugelement, das dazu eingerichtet ist, aus einer ersten Position in axialer Richtung in eine zweite Position bewegt zu werden, wobei ein in dem Aufnahmemittel aufgenommener Werkzeugkegel verriegelt ist, wenn das erste Anzugelement sich in der ersten Position befindet, und der in dem Aufnahmemittel aufgenommene Werkzeugkegel entriegelt ist, wenn das erste Anzugelement sich in der zweiten Position befindet.

Das erste Anzugelement weist einen ersten Anzugabschnitt auf, der auf einer der ersten Seite des Werkzeugköchers gegenüberliegenden zweiten Seite (d.h. auf der Rückseite des Werkzeugköchers, wenn die die Werkzeugkegelaufnahme aufweisende Seite des Werkzeugköchers als Vorderseite bezeichnet wird) in axialer Richtung aus dem Werkzeugköcher hervorsteht, insbesondere zum Ausüben einer Kraft (bzw. zum Angreifen einer extern ausgeübten Kraft) auf das erste Anzugelement, um das erste Anzugelement von der ersten in die zweite Position oder von der zweiten in die erste Position zu bewegen.

Hierbei liegt die Idee zugrunde, einen Ver- bzw. Entriegelungsmechanismus nicht auf der Vorderseite des Werkzeugköchers vorzusehen, der an der Greiferrille des Werkzeugkegels angreift, sondern einen rückseitigen Ver- bzw. Entriegelungsmechanismus vorzusehen, der auf einfache Weise durch eine externe Entriegelungseinrichtung betätigt werden kann, indem ein Anzugabschnitt des beweglichen Anzugelements rückseitig in axialer Richtung aus dem Werkzeugwechsler hervorsteht und somit auf einfache Weise einen Angriffspunkt für eine Entriegelungseinrichtung bereitstellt, an dem eine vom Werkzeugköcher weg ziehende Kraft und/oder eine zu dem Werkzeugköcher hin drückende Kraft ausgebracht werden kann.

Der erste Anzugabschnitt ist derart ausgebildet, dass er mit einem zweiten Anzugabschnitt einer separaten Entriegelungseinrichtung zum Entriegeln des in dem Werkzeugköcher aufgenommenen und verriegelten Werkzeugkegels in einen Eingriffszustand bringbar ist, zum Ausüben einer Kraft (bzw. zum Angreifen einer extern ausgeübten Kraft) auf das erste Anzugelement mittels des zweiten Anzugelements im Eingriffszustand der beiden Anzugabschnitte, um das erste Anzugelement von der ersten in die zweite Position oder von der zweiten in die erste Position zu bewegen.

Bei dem Eingriffszustand befindet sich der zweite Anzugabschnitt mit dem ersten Anzugabschnitt in einem in axialer Richtung formschlüssig unverlierbaren Eingriff. "Unverlierbarer formschlüssiger Eingriff in axialer Richtung" bedeutet hierbei im Sinne der Erfindung, dass sich der zweite Anzugabschnitt und der erste Anzugabschnitt in axialer Richtung beidseitig durch jeweiligen gegenseitigen Formschluss (d.h. durch Kontakt gegenüberliegender Sperrabschnitte) mechanisch sperren, wobei jedoch vorzugsweise kein gleichzeitiger beidseitiger Formschluss vorhanden ist, so dass sich der erste Anzugabschnitt und der zweite Anzugabschnitt relativ zueinander zumindest in den Grenzen eines begrenzten axialen Spielbereichs axial beweglich sind und eine über den axialen Spielbereich hinausgehende axiale Relativbewegung zwischen den Anzugabschnitten in den beiden axialen Richtungen formschlüssig gesperrt ist.

Der erste Anzugabschnitt ist weiterhin derart ausgebildet, dass er durch eine Relativbewegung zu dem zweiten Anzugabschnitt in einer ersten Richtung senkrecht zur axialen Richtung in den Eingriffszustand mit dem zweiten Anzugabschnitt bringbar ist. Somit können die Anzugabschnitte auf besonders einfache Weise effizient und schnell in den Eingriffszustand gebracht werden, z.B. indem der Werkzeugköcher einfach in der ersten Richtung senkrecht zur axialen Richtung zu der die Entriegelungseinrichtung haltende Entriegelungsposition des Werkzeugmagazins verfahren wird (und/oder indem die Entriegelungseinrichtung in der ersten Richtung senkrecht zur axialen Richtung bzw.

entgegen der ersten Richtung zu dem Werkzeugköcher verfahren wird).

Der erste Anzugabschnitt weist vorzugsweise einen endseitigen Anzugkopf auf, der dazu ausgebildet ist, mit dem zweiten Anzugabschnitt den in axialer Richtung formschlüssig unverlierbaren Eingriff einzunehmen, wenn der erste und der zweite Anzugabschnitt sich in dem Eingriffszustand befinden.

Der erste Anzugabschnitt weist in axialer Richtung vorzugsweise ein T-förmiges Profil oder auch ein L-förmiges Profil auf.

Das erste Befestigungsmittel ist vorzugsweise dazu eingerichtet, den Werkzeugköcher um eine senkrecht zur axialen Richtung des Werkzeugköchers angeordneten Achse schwenkbar an dem Werkzeugmagazin zu befestigen.

Vorzugsweise umfasst der Werkzeugköcher weiterhin einen ersten Stopperabschnitt, der auf der zweiten Seite des Werkzeugköchers angeordnet ist. Der Stopperabschnitt weist vorzugsweise ein Stopperelement auf, das auf der zweiten Seite des Werkzeugköchers in axialer Richtung aus dem Werkzeugköcher hervorsteht. Das Stopperelement steht in axialer Richtung vorzugsweise weiter aus dem Werkzeugköcher hervor als der erste Anzugabschnitt.

Das Verriegelungsmittel umfasst vorzugsweise weiterhin ein Halteelement, das ein radial bewegliches Verriegelungselement hält, wobei das erste Anzugelement das Verriegelungselement vorzugsweise in radialer Richtung in eine Spannposition zwingt, in der das Verriegelungselement zur Verriegelung des Werkzeugkegels gegen eine Spannfläche des in dem Aufnahmemittel aufgenommenen Werkzeugkegels drückt, wenn sich das erste Anzugelement in der ersten Position befindet.

Das Verriegelungselement ist vorzugsweise in radialer Richtung zwischen der Spannposition und einer Löseposition beweglich, wenn sich das erste Anzugelement in der zweiten Position befindet, wobei das Verriegelungselement in der Löseposition vorzugsweise nicht mit der Spannfläche des Werkzeugkegels in Kontakt ist. Vorzugsweise ist das Verriegelungselement als Kugelelement ausgebildet.

Das Aufnahmemittel ist in einer bevorzugten Ausführungsform dazu eingerichtet, einen als Steilkegel (SK) ausgebildeten Werkzeugkegel aufzunehmen, der einen endseitigen Anzugkolben aufweist. Das erste Anzugelement zwingt das Verriegelungselement dann vorzugsweise in radialer Richtung nach innen in die Spannposition, in der das Verriegelungselement zur Verriegelung des in dem Aufnahmemittel aufgenommenen Steilkegels in radialer Richtung nach innen gegen die Spannfläche des Anzugkolbens des Steilkegels drückt, wenn sich das erste Anzugelement in der ersten Position befindet.

Das Aufnahmemittel ist in einer alternativen bevorzugten Ausführungsform dazu eingerichtet, einen als Hohlschaftkegel (HSK) ausgebildeten Werkzeugkegel aufzunehmen, der eine innenseitige Spannfläche im Inneren des Hohlschafts des Hohlschaftkegels aufweist. Das erste Anzugelement zwingt das Verriegelungselement dann vorzugsweise in radialer Richtung nach außen in die Spannposition, in der das Verriegelungselement zur Verriegelung des in dem Aufnahmemittel aufgenommenen Hohlschaftkegels in radialer Richtung nach außen gegen die innenseitige Spannfläche des Hohlschaftkörpers des Hohlschaftkegels drückt, wenn sich das erste Anzugelement in der ersten Position befindet.

Hierbei ermöglicht die vorliegende Erfindung eine flexible Anwendung und ein Werkzeugköcher kann sowohl zum Verriegeln bzw. Entriegeln von Steilkegeln als auch zum Verriegeln bzw. Entriegeln von Hohlschaftkegeln ausgebildet werden. In beiden Ausführungsformen ist es insbesondere vorteilhaft möglich, die gleiche (an unterschiedlichen Werkzeugmagazinen) bzw. sogar selbe (am selben Werkzeugmagazin) Entriegelungseinrichtung sowohl zum Ent-/Verriegeln von SK-aufnehmenden Werkzeugköchern als auch HSK-aufnehmenden Werkzeugköchern zu verwenden.

Vorzugsweise umfasst das Verriegelungsmittel weiterhin ein Federelement, das dazu eingerichtet ist, eine Rückstellkraft von der zweiten Position hin zu der ersten Position auf das erste Anzugelement auszuüben.

Die Entriegelungseinrichtung zum Entriegeln eines in dem Werkzeugköcher aufgenommenen und verriegelten Werkzeugkegels umfasst ein zweites Befestigungsmittel zur Befestigung der Entriegelungseinrichtung an dem Werkzeugmagazin an einer Entriegelungsposition des Werkzeugmagazins und ein Entriegelungsmittel zum Entriegeln des in dem Werkzeugköcher aufgenommenen und verriegelten Werkzeugkegels, wenn sich der Werkzeugköcher an der Entriegelungsposition befindet.

Das Entriegelungsmittel umfasst ein in axialer Richtung der Entriegelungseinrichtung bewegliches zweites Anzugelement, das einen zweiten Anzugabschnitt aufweist, der mit dem ersten Anzugabschnitt des ersten Anzugelements in einen Eingriffszustand bringbar ist, bei dem sich der zweite Anzugabschnitt mit dem ersten Anzugabschnitt des ersten Anzugelements in einem in axialer Richtung formschlüssig unverlierbaren Eingriff befindet, wenn sich der Werkzeugköcher an der Entriegelungsposition befindet.

Das Entriegelungsmittel ist dazu eingerichtet, einen in dem Aufnahmemittel aufgenommenen Werkzeugkegel zu entriegeln, wenn sich der erste Anzugabschnitt und der zweite Anzugabschnitt in dem Eingriffszustand befinden, indem das zweite Anzugelement axial gesteuert wird und über die axiale formschlüssige Verbindung des Eingriffszustands das erste Anzugelement von der ersten axialen Position in die zweite axiale Position bewegt.

Der zweite Anzugabschnitt ist derart ausgebildet ist, dass er durch eine Relativbewegung zu dem ersten Anzugabschnitt in einer ersten Richtung senkrecht zur axialen Richtung in den Eingriffszustand mit dem ersten Anzugabschnitt bringbar ist.

Weitere Aspekte und Vorteile der vorliegenden Erfindung werden ersichtlich aus der folgenden Beschreibung der angehängten Figuren.

Beispielhaft zeigen:
- Fig. 1A: eine Perspektivansicht einer Werkzeugmaschine nach einem Ausführungsbeispiel der vorliegenden Erfindung,
- Fig. 1B: eine Detaildarstellung des Ausschnitts A aus Fig. 1A,
- Fig. 2A: eine perspektivische Vorderansicht eines Werkzeugmagazins nach einem Ausführungsbeispiel der vorliegenden Erfindung,
- Fig. 2B: eine perspektivische Rücksicht des Werkzeugmagazins aus Fig. 2A,
- Fig. 2C: eine Detaildarstellung des Ausschnitts B aus Fig. 2B,
- Fig. 3A: eine Schnittansicht entlang der axialen Richtung eines Werkzeugköchers mit verriegeltem Werkzeugkegel und einer Entriegelungseinrichtung nach einem ersten Ausführungsbeispiel der vorliegenden Erfindung,
- Fig. 3B: eine Schnittansicht entlang der axialen Richtung eines Werkzeugköchers mit entriegeltem Werkzeugkegel und einer Entriegelungseinrichtung nach dem ersten Ausführungsbeispiel der vorliegenden Erfindung,
- Fig. 4A: eine Detailansicht aus Fig. 3A,
- Fig. 4B: eine Detailansicht aus Fig. 3B,
- Fig. 5: eine Explosionsdarstellung eines Werkzeugköchers und einer Entriegelungseinrichtung nach dem ersten Ausführungsbeispiel der vorliegenden Erfindung,
- Fig. 6: eine Detailansicht der Explosionsdarstellung des Werkzeugköchers aus Fig. 5,
- Fig. 7: eine Detailansicht der Explosionsdarstellung der Entriegelungseinrichtung aus Fig. 5,
- Fig. 8: eine Perspektivansicht des zweiten Anzugelements aus Fig. 7,
- Fig. 9: eine Perspektivansicht des ersten Anzugelements aus Fig. 6,
- Fig. 10A: eine Schnittansicht entlang der axialen Richtung eines Werkzeugköchers mit verriegeltem Werkzeugkegel und einer Entriegelungseinrichtung nach einem zweiten Ausführungsbeispiel der vorliegenden Erfindung,
- Fig. 10B: eine Schnittansicht entlang der axialen Richtung eines Werkzeugköchers mit entriegeltem Werkzeugkegel und einer Entriegelungseinrichtung nach dem zweiten Ausführungsbeispiel der vorliegenden Erfindung,
- Fig. 11A: eine Detailansicht aus Fig. 10A,
- Fig. 11B: eine Detailansicht aus Fig. 10B,
- Fig. 12: eine Explosionsdarstellung eines Werkzeugköchers und einer Entriegelungseinrichtung nach dem zweiten Ausführungsbeispiel der vorliegenden Erfindung und
- Fig. 13: eine Detailansicht der Explosionsdarstellung des Werkzeugköchers aus Fig. 12.

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

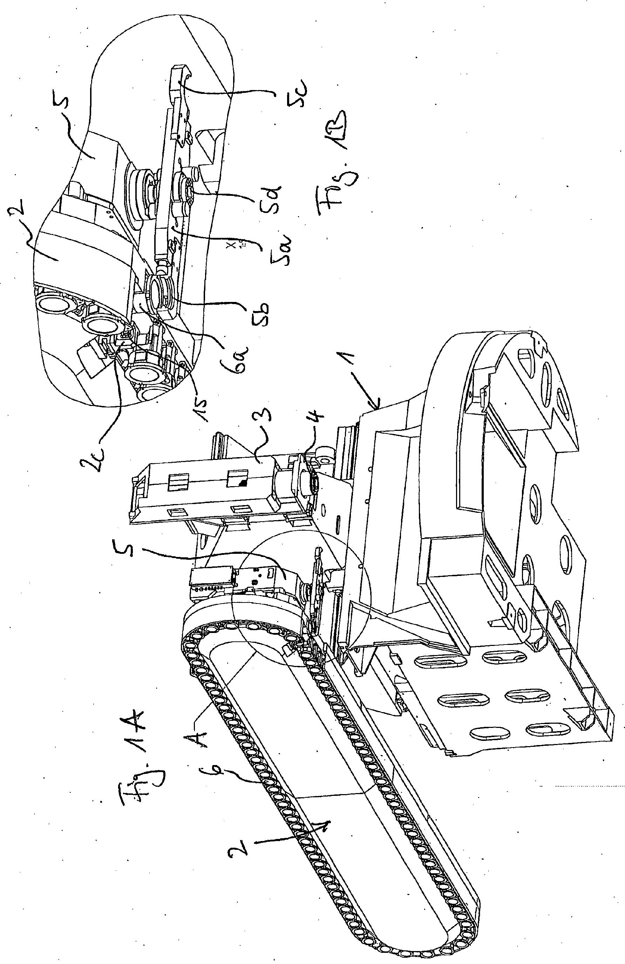

Fig. 1A zeigt eine Werkzeugmaschine 1 zum Bearbeiten eines Werkstücks mittels eines Werkzeugs. Die Werkzeugmaschine 1 umfasst einen beispielhaft vertikal verfahrbaren Spindelträger 3 mit einer werkzeugtragenden Spindel 4 in der z.B. Fräs- und Bohrwerkzeuge zur fräsenden bzw. bohrenden Bearbeitung des Werkstücks aufgenommen und angetrieben werden können.

Beispielhaft ist an einer Seite der Werkzeugmaschine ein Werkzeugmagazin 2 bereitgestellt, in dem eine Mehrzahl von Werkzeugen für die Bearbeitung eines Werkstücks an der Werkzeugmaschine bereit gehalten werden können.

Beispielhaft ist das Werkzeugmagazin in Fig. 1A als Kettenmagazin ausgebildet, bei dem die werkzeugaufnehmenden Werkzeugköcher 6 an einer verfahrbaren Kette gehalten werden. In weiteren Ausführungsbeispielen der Erfindung ist es jedoch ebenso möglich, andere Typen von Werkzeugmagazinen bereitzustellen, wie z.B. ein Regalmagazin, ein Radmagazin, ein Revolvermagazin, ein Scheibenmagazin oder andere.

Das Werkzeugmagazin 2 umfasst eine Mehrzahl von Werkzeugköchern 6 zur Aufnahme der Werkzeuge, wobei die Werkzeuge (wie z.B. Fräswerkzeuge, Bohrwerkzeuge etc.) mit einer Werkzeugaufnahme in den Werkzeugköchern 6 aufgenommen, die als Schnittstelle zwischen den Werkzeugen und der Spindel 4 dienen. Als derartige Schnittstellen bzw. Werkzeugaufnahmen sind im Stand der Technik z.B. Morsekegel, Hohlschaftkegel (HSK) und Steilkegel (SK) oder ähnliche bekannt, die im Allgemeinen als Werkzeugkegel oder auch als Werkzeugaufnahmen oder Grundaufnahmen bezeichnet werden.

Weiterhin umfasst die Werkzeugmaschine 1 beispielhaft einen Werkzeugwechsler 5 zum Wechseln eines an der Spindel 4 aufgenommenen Werkzeugs. Hierbei ist es im Allgemeinen möglich, mittels des Werkzeugwechslers 5 ein Werkzeug von einer Werkzeugwechselposition des Werkzeugmagazins 2 der Spindel 4 zuzuführen und ein Werkzeug von der Spindel 4 der Werkzeugwechselposition des Werkzeugmagazins 2 zuzuführen und/oder ein an der Spindel 4 aufgenommenes Werkzeug mit einem an der Werkzeugwechselposition des Werkzeugmagazins 2 befindlichen Werkzeug auszuwechseln.

Fig. 1B zeigt eine Detaildarstellung des Ausschnitts A aus Fig. 1A. Beispielhaft umfasst der Werkzeugwechsler 5 einen rotierbaren Doppelgreiferarm 5a mit einer mittig angeordneten steuerbaren Rundachse 5d und jeweiligen endseitigen Greiferabschnitten 5b und 5c zum Greifen eines Werkzeugs bzw. Werkzeugkegels (insbesondere zum Greifen eines Werkzeugkegels an dessen Greiferrille).

Der Doppelgreiferarm 5a ist in dieser beispielhaften Ausführungsform vorteilhaft dazu eingerichtet einen gleichzeitigen Werkzeugwechsel auszuführen, bei dem der eine Greiferabschnitt 5c ein in der Spindel 4 aufgenommenes Werkzeug greift und der andere Greiferabschnitt 5b ein in dem Werkzeugköcher 6a an der Werkzeugwechselposition des Werkzeugmagazins 2 aufgenommenes Werkzeug greift, und diese durch eine mittels der Rundachse 5d gesteuerte Drehung um 180 Grad auswechselt.

Zudem ist der Werkzeugwechsler 5 beispielhaft dazu eingerichtet, den Doppelgreiferarm 5a entlang der Rotationsachse der Rundachse 5d (d.h. in vertikaler Richtung in dem Ausführungsbeispiel gemäß Fig. 1A) zu verfahren, um die mittels des Greiferabschnitte 5b und 5c gegriffenen Werkzeuge aus dem Werkzeugköcher 6a bzw. aus der Spindel 4 in axialer Richtung des Werkzeugköchers 6a bzw. der Spindel 4 herauszunehmen bzw. in diese einzusetzen. Es ist bei dieser beispielhaften Ausführung des Doppelgreiferarm-Werkzeugwechslers 5 daher erforderlich, bei einem Werkzeugwechsel die axialen Richtungen des Werkzeugköchers 6a an der Werkzeugwechselposition und der Spindel 4 parallel zueinander auszurichten.

In Fig. 1B ist ein Werkzeugköcher 6a gezeigt, der sich in der Werkzeugwechselposition des Werkzeugmagazins 2 befindet. Hierbei ist das Werkzeugmagazin 2 beispielhaft derart ausgebildet, dass der sich an der Werkzeugwechselposition befindende Werkzeugköcher 6a im Gegensatz zu den übrigen Werkzeugköchern 6 des Werkzeugmagazins 2 um 90 Grad nach unten verschwenkt ist, so dass die axiale Richtung des Werkzeugköchers 6a (entsprechend der Aufnahmerichtung des Werkzeugkegels bzw. entsprechend der axialen Richtung des Werkzeugkegels, wenn dieser in dem Werkzeugköcher aufgenommen ist) vertikal nach unten zeigt und mit der axialen Richtung der Spindel 4 parallel ausgerichtet ist. Die axialen Richtungen der übrigen Werkzeugköcher 6 sind, wie in Fig. 1A ersichtlich ist, beispielhaft horizontal und jeweils parallel zueinander ausgerichtet.

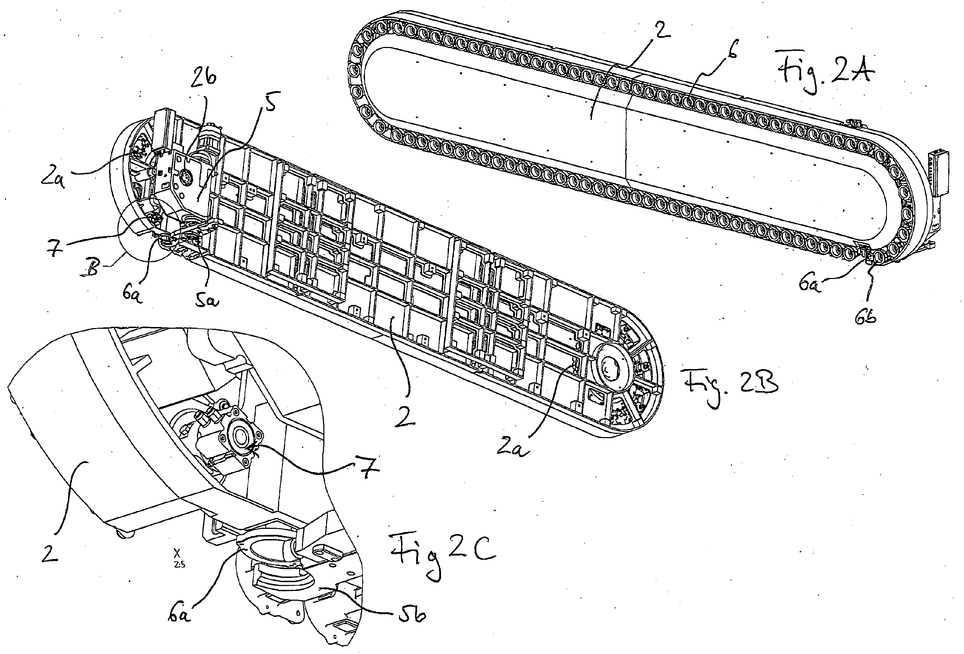

Fig. 2A zeigt eine perspektivische Vorderansicht des Werkzeugmagazins 2 aus Fig. 1A, beispielhaft ausgebildet als Kettenmagazin. Fig. 2B zeigt eine perspektivische Rückansicht des Werkzeugmagazins 2 aus Fig. 1A bzw. Fig. 2A.

Das Werkzeugmagazin 2 umfasst eine Mehrzahl von Werkzeugköchern 6, die nebeneinander entlang einer umfänglichen, geschlossenen Kette (nicht gezeigt) des Werkzeugmagazins 2 gehalten sind. Auf gegenüberliegenden Seiten des Werkzeugmagazins 2 sind zwei Kettenräder 2a jeweils drehbar lagernd angeordnet, die die die Werkzeugköcher 6 haltende Kette führen. Zum umfänglichen Verfahren der Werkzeugköcher 6 wird die Kette angetrieben, indem das auf der Seite des Werkzeugwechslers 5 liegende Kettenrad 2a mittels einer steuerbaren Rundachse 2b angetrieben wird.

In Fig. 2A befindet sich der Werkzeugköcher 6a analog zu Fig. 1A an der Werkzeugwechselposition des Werkzeugmagazins 2. Ein benachbarter Werkzeugköcher 6b befindet sich an einer Entriegelungsposition des Werkzeugmagazins 2. Aufgrund der hohen Verfahrgeschwindigkeiten der Werkzeugköcher 6 beim Antreiben der Kette und aus Sicherheitsgründen ist es vorgesehen, die Werkzeuge bzw. Werkzeugkegel, die in den Werkzeugköchern 6 aufgenommen sind, mittels eines in den Werkzeugköchern 6 integrierten Verriegelungsmechanismus zu verriegeln.

Hierbei ist es erforderlich, die Werkzeuge bzw. Werkzeugkegel zu entriegeln, wenn das jeweilige Werkzeug aus dem Werkzeugmagazin 2 an der Entriegelungsposition entnommen werden soll, ggf. um den Werkzeugköcher 6 mit einem Werkzeug zu beladen und/oder um ein im Werkzeugköcher 6 aufgenommenes Werkzeug zu entladen. Das Werkzeugmagazin 2 ist dazu eingerichtet, das Werkzeug bzw. den Werkzeugkegel zu entriegeln, welcher in dem sich an der Entriegelungsposition des Werkzeugmagazins 2 befindlichen Werkzeugköcher 6b aufgenommen und verriegelt ist.

Das in dem Werkzeugköcher 6b aufgenommene und entriegelte Werkzeug bzw. der in dem Werkzeugköcher 6b aufgenommene und entriegelte Werkzeugkegel kann dann an der Entriegelungsposition zum Ent- und Beladen des Werkzeugmagazins 2 aus dem Werkzeugköcher 6b entfernt werden (d.h. die Entriegelungsposition entspricht der Eingabeposition bzw. Werkzeugeingabeposition des Werkzeugmagazins 2). Außerdem kann ein Werkzeugkegel in einen leeren Werkzeugköcher 6b eingelegt werden, z.B. nachdem der bislang aufgenommene Werkzeugkegel entnommen ist.

Weiterhin kann der Werkzeugköcher 6b auch zu der benachbarten Werkzeugwechselposition verfahren und verschenkt werden, um einen Werkzeugwechsel durchzuführen, bei dem das in dem Werkzeugköcher 6b aufgenommene Werkzeug bzw. der in dem Werkzeugköcher 6b aufgenommene Werkzeugkegel aus dem Werkzeugköcher 6b in die Spindel 4 eingewechselt wird.

Hierbei ist es gemäß diesem Ausführungsbeispiel beispielhaft vorgesehen, keine weitere Entriegelungseinrichtung an der Werkzeugwechselposition vorzusehen. Der Verriegelungsmechanismus ist beispielhaft dazu eingerichtet, bei höherer Krafteinwirkung durch den automatischen Werkzeugwechsler 5 an der Greiferille automatisch gegen die Federkraft der Feder 12 (später beschrieben) einzuwirken und den verriegelten Werkzeugkegel freizugeben, um es dem Werkzeugwechsler 5 zu ermöglichen, mittels höherer Krafteinwirkung an der Greiferrille des Werkzeugkegels den verriegelten Werkzeugkegel ohne Entriegelung mittels Entriegelungseinrichtung zu entnehmen. Alternativ ist es jedoch zudem denkbar, eine zusätzliche Entriegelungseinrichtung an der Werkzeugwechselposition vorzusehen, um den Werkzeugkegel auch zum Werkzeugwechsel aktiv an der Werkzeugwechselposition zu entriegeln.

Fig. 2C zeigt eine Detaildarstellung des Ausschnitts B aus Fig. 2B. An der Rückseite des Werkzeugmagazins 2 ist an der Entriegelungsposition eine Entriegelungseinrichtung 7 angeordnet, die dazu eingerichtet ist, einen in dem Werkzeugköcher 6b aufgenommenen und verriegelten Werkzeugkegel zu entriegeln, wenn der Werkzeugköcher 6b sich an der Entriegelungsposition befindet bzw. in diese verfahren wurde (und ggf. in weiteren Ausführungsbeispielen auch, einen in dem Werkzeugköcher 6b aufgenommenen und entriegelten Werkzeugkegel zu verriegeln, wenn der Werkzeugköcher 6b sich an der Entriegelungsposition befindet).

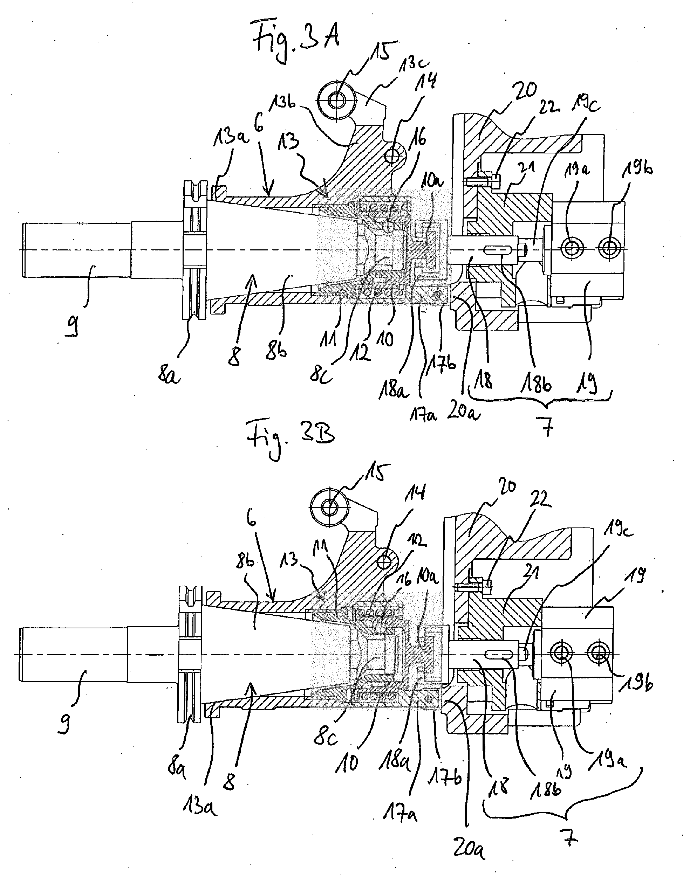

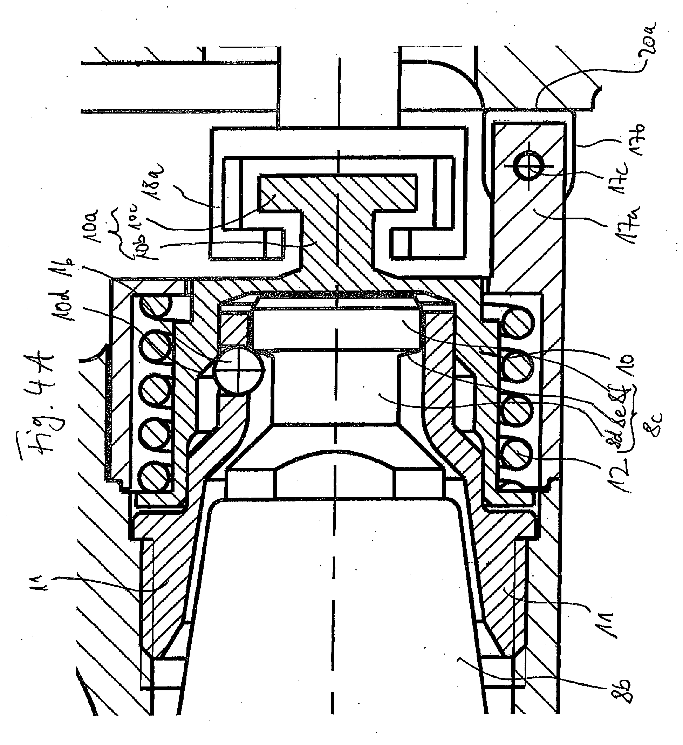

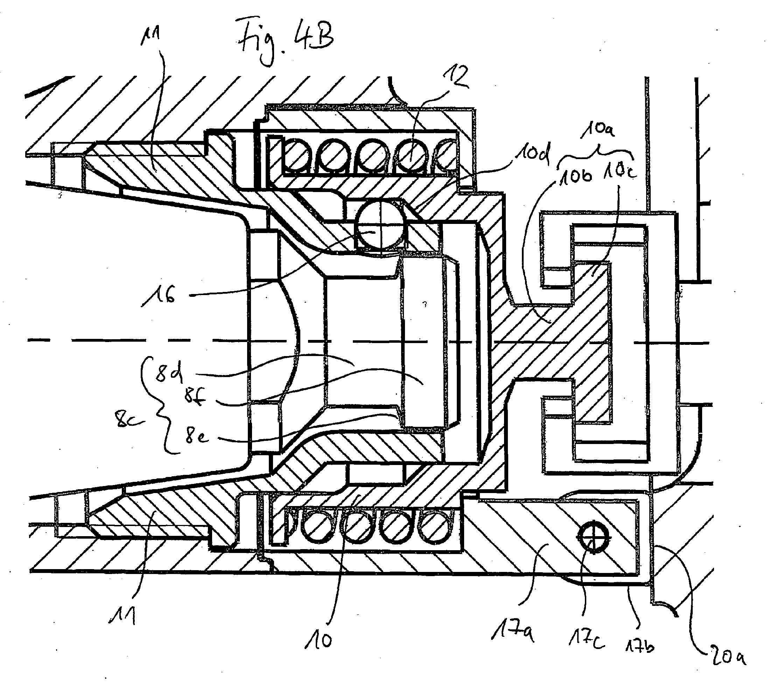

Fig. 3A zeigt eine Schnittansicht entlang der axialen Richtung eines Werkzeugköchers 6 gemäß einem ersten Ausführungsbeispiel der vorliegenden Erfindung mit verriegeltem Werkzeugkegel 8, in diesem Ausführungsbeispiel beispielhaft als Steilkegel ausgebildet, und einer Entriegelungseinrichtung 7 nach dem ersten Ausführungsbeispiel der vorliegenden Erfindung. Fig. 3A zeigt die gleiche Schnittansicht entlang der axialen Richtung der Entriegelungseinrichtung 7 und des Werkzeugköchers 6 gemäß dem ersten Ausführungsbeispiel der vorliegenden Erfindung, jedoch mit entriegeltem Werkzeugkegel 8 und einer Entriegelungseinrichtung 7 nach dem ersten Ausführungsbeispiel der vorliegenden Erfindung. Fig. 4A zeigt eine Detailansicht aus Fig. 3A und Fig. 4B zeigt eine Detailansicht aus Fig. 3B.

Ein Werkzeug 9 ist in einem Steilkegel 8 mit einer Greiferrille 8a (auch Greifernut genannt), einem Steilkegelschaft 8b und einem Anzugbolzen 8c eingesetzt. Wie in den Fig. 4A und 4B besser erkennbar ist, umfasst der Anzugbolzen 8c einen Anzugbolzenschaft 8d und einen endseitigen Anzugbolzenkopf 8f dessen Durchmesser größer ist, als der des Anzugbolzenschafts 8d. Zwischen dem Anzugbolzenschaft 8d und dem Anzugbolzenkopf 8f weist der Anzugbolzen 8 die Spannfläche 8e auf.

Der Steilkegelschaft 8b ist in einer Aufnahmeöffnung 13a eines Werkzeugköcherkörpers 13 des Werkzeugköchers 6 aufgenommen und befindet sich in einem umfänglichen Formschluss des Steilkegelschafts 8b mit der umfänglichen Wandung der Aufnahmeöffnung 13a des Werkzeugköcherkörpers 13 und aufgrund der sich verjüngenden Form des Steilkegelschafts 8b und der Wandung der Aufnahmeöffnung 13a des Werkzeugköcherkörpers 13 weiterhin in einem einseitigen Formschluss in axialer Richtung. Somit erlaubt die Formschlussverbindung zwischen dem Steilkegelschaft 8b und der umfänglichen Wandung der Aufnahmeöffnung 13a des Werkzeugköcherkörpers 13 in der aufgenommenen Stellung gemäß Figs. 3B und 4B nur eine Entnahme des Steilkegels 8 in axialer Richtung nach außen (d.h. nach links in Figs. 3B und 4B). Die axiale Richtung ist in Figs. 3B und 4B durch die gestrichelte horizontale Linie gekennzeichnet.

Der Werkzeugköcherkörper 13 weist einen Befestigungsabschnitt 13b auf, an dem ein Befestigungsstift 14 (Befestigungselement) angeordnet ist, an dem der Werkzeugköcherkörper 13 an einem Kettenglied der Kette des Werkzeugmagazins 2 befestigbar ist. Insbesondere ermöglicht der Befestigungsstift 14 eine schwenkbare Befestigung des Werkzeugköcherkörpers 13 an einem Kettenglied der Kette des Werkzeugmagazins 2, welche eine Verschwenkung des Werkzeugköcherkörpers 13 bzw. der axialen Richtung des Werkzeugköchers 6 um 90 Grad nach unten ermöglicht, um den Werkzeugköcher 6 an der Werkzeugwechselposition in die Werkzeugwechselhaltung gemäß Figs. 1A bis 2C zu verschwenken. Um diese Schwenkbewegung steuern bzw. führen zu können weist ein Führungsabschnitt 13c des Werkzeugköcherkörpers 13 ein Führungselement 15 auf.

Wird das Führungselement 15 an der Werkzeugwechselposition nach unten geführt, schwenkt der Werkzeugköcher 6 geführt nach unten in die Werkzeugwechselhaltung gemäß Figs. 1A bis 2C. Fig. 1B zeigt hierzu entsprechend ein vertikal verfahrbares Greifelement 2c des Werkzeugmagazins, welches beispielhaft dazu eingerichtet ist, an der Werkzeugwechselposition das Führungselement 15 des an der Werkzeugwechselposition befindlichen Werkzeugköchers 6a nach unten zu verfahren, um den Werkzeugköcher 6a um 90 Grad nach unten zu verschwenken.

Hierzu ermöglicht das Greifelement 2c ein horizontales Spiel beim Führen des Führungselements 15 vertikal nach unten, um eine seitliche Bewegung des Führungselements 15 zu erlauben. Somit kann der Werkzeugköcher 6a mit einer einfachen vertikalen Linearbewegung des Greifelements 2c verschwenkt werden, obwohl das Führungselement 15 selbst eine Drehbewegung um den Aufhängungspunkt des Befestigungsstifts 14 durchführt und dabei nicht eine einfache Linearbewegung durchführt, sondern einer Kreisbogenbahn folgt.

Der Werkzeugköcher 6 umfasst weiterhin einen Verriegelungsmechanismus zum Verriegeln des in dem Werkzeugköcher 6 aufgenommenen Werkzeugs. Der Verriegelungsmechanismus umfasst ein Halteelement 11, ein Anzugelement 10, ein Kugelelement 16 und ein Federelement 12. Figs. 3A und 4A zeigen den Verriegelungsmechanismus im verriegelten Zustand und Figs. 3B und 4B zeigen den Verriegelungsmechanismus im entriegelten Zustand.

Das Halteelement 11 umschließt den Anzugbolzen 8c des Steilkegels 8 umfänglich und ist sowohl in axialer als auch in radialer Richtung fixiert in dem Werkzeugköcherkörper 13 angeordnet. Das Halteelement 11 umfasst ein in radialer Richtung verlaufendes Halteloch 11a in dem das Kugelelement 16 radial beweglich gehalten ist. Der Durchmesser des Kugelelements 16 ist größer als die Tiefe des Haltelochs 11a. Zudem kann sich der Durchmesser des das Kugelelement 16 aufnehmenden Haltelochs 11a nach innen hin verjüngen, um ein Durchrutschen des Kugelelements 16 nach innen zu verhindern, wenn kein Steilkegel 8 in dem Werkzeugköcher 6 aufgenommen ist.

Beispielhaft ist ein Endabschnitt 11b des Halteelements 11 an die Form des Anzugbolzens 8c des Steilkegels 8 angepasst, derart, dass sich der Endabschnitt 11b des Halteelements 11 mit dem Anzugbolzenkopf 10c sich in einem umfänglichen Formschluss befinden, so dass der von dem Endabschnitt 11b umschlossene Anzugbolzenkopf 10c in radialer Richtung fixiert ist.

Das Anzugelement 10 umschließt das Halteelement 11 umfänglich und ist radialer Richtung fixiert in dem Werkzeugköcherkörper 13 angeordnet. Jedoch ist das Anzugelement 10 relativ zu dem Halteelement 11 in axialer Richtung beweglich in dem Werkzeugköcherkörper 13 angeordnet.

Insbesondere kann das Anzugelement 10 in axialer Richtung zwischen einer ersten Position gemäß Figs. 3A und 4A und einer zweiten Position gemäß Figs. 3B und 4B bewegt werden. Das Federelement 12 spannt das Anzugelement 10 aus der zweiten Position hin zu der ersten Position vor, d.h. das Federelement 12 erzeugt eine auf das Anzugelement 10 wirkende Rückstellkraft hin zu der ersten Position, wenn sich das Anzugelement 10 in der zweiten Position befindet. Das heißt, dass die Rückstellkraft des Federelements in Figs. 3B und 4B nach links wirkt, wobei das Anzugelement 10 die erste Position in Figs. 3A und 4A einnimmt und die zweite Position in Figs. 3B und 4B einnimmt. Ohne äußere Einwirkung am Anzugelement 10 (z.B. mittels einer Entriegelungseinrichtung) spannt das Federelement 12 das Anzugelement 10 in die erste Position vor, d.h. in einen verriegelten Zustand des Verriegelungsmechanismus.

Das Anzugelement 10 ist derart ausgebildet, dass sich der Innendurchmesser des Anzugelements 10 im Bereich des in der ersten und zweiten Position dem Halteloch 11a benachbarten bzw. angrenzenden Abschnitts des Anzugelements 10 in einer Richtung von der zweiten Position zur ersten Position (d.h. in Figs. 3A bis 4B von links nach rechts) hin verjüngt (nach innen verkleinert). Beispielhaft weist die Innenwandung des Halteelements 10 hierzu im Bereich des in der ersten und zweiten Position dem Halteloch 11a benachbarten bzw. angrenzenden Abschnitts des Anzugelements 10 einen Teilhohlkegelabschnitt 10d auf.

Die Innenwandung des Halteelements 10 mit dem Teilhohlkegelabschnitt 10d ist hierbei insbesondere derart ausgebildet, dass das Kugelelement 16 von dem Teilhohlkegelabschnitt 10d radial nach innen in dem Halteloch 11a bewegt wird, wenn das Anzugelement aus der zweiten Position hin zur ersten Position bewegt wird (d.h., wenn das Anzugelement in Fig. 3B nach links bewegt wird).

Bei in der Aufnahmeöffnung 13a des Werkzeugköcherkörpers 13 aufgenommenem Steilkegel 8 drückt der Teilhohlkegelabschnitt 10d des Anzugelements 10 das Kugelelement 16 durch das Halteloch 11a gegen die Spannfläche 8e des Anzugbolzens 8c des Steilkegels 8, wenn sich das Anzugelement 10 in der ersten Position befindet (siehe Figs. 3A und 4A). In dieser ersten Position ist der Steilkegel 8 in dem Werkzeugköcher 6 verriegelt, da das nach innen gedrückte Kugelelement 16 den Anzugbolzen 8a des Steilkegels 8 klemmt und axial fixiert bzw. verriegelt.

Wird dahingegen das Anzugelement 10 von der ersten Position in die zweite Position bewegt (d.h. in Figs. 3A bis 4C nach rechts), ermöglicht die Ausbildung der Innenwandung des Anzugelements 10 es dem Kugelelement 16, radial nach außen auszuweichen bis der Anzugbolzen 8c bzw. insbesondere der Anzugbolzenkopf 8f freigegeben ist bzw. nicht mehr von dem Kugelelement 16 gesperrt ist, wie es in Figs. 3B und 4B dargestellt ist. In dieser zweiten Position ist der Steilkegel 8 in dem Werkzeugköcher 6 entriegelt, da das nach außen ausweichende Kugelelement 16 den Anzugbolzen 8a des Steilkegels 8 nicht mehr klemmt und axial nicht mehr fixiert.

Weiterhin umfasst das Anzugelement 10 endseitig einen Anzugabschnitt 10a, der auf der der Aufnahmeöffnung 13a des Werkzeugköcherkörpers 13 gegenüberliegenden Seite aus dem Werkzeugköcher hervorsteht. Dies ermöglicht es vorteilhaft, dass der Anzugabschnitt 10a des Anzugelements 10 von außen einfach zugänglich ist und durch axiale Krafteinwirkung bewegt werden kann, insbesondere um das Anzugelement 10 von der ersten Position in die zweite Position bzw. von der zweiten Position in die erste Position zu steuern, um den Steilkegel 8 auf einfache Weise mittels einer separaten Entriegelungseinrichtung entriegeln zu können.

An der Entriegelungsposition des Werkzeugmagazins 2 ist weiterhin eine Entriegelungseinrichtung 7 befestigt. Die Entriegelungseinrichtung 7 umfasst ein Befestigungselement 21, das mittels einer Schraube 22 an einem Befestigungsabschnitt 20 des Werkzeugmagazins 2 befestigt ist und eine Anzugeinrichtung 19 und ein axial bewegliches Anzugelement 18 hält. Beispielhaft ist die Anzugeinrichtung 19 als Pneumatikzylinder ausgebildet mit Pneumatikanschlüssen 19a und 19b.

Das Anzugelement 18 der Entriegelungseinrichtung 7 weist einen endseitigen, dem Werkzeugköcher 6 zugewandten Anzugabschnitt 18a auf, der mit dem Anzugabschnitt 10a des Anzugelements 10 des Verriegelungsmechanismus des Werkzeugköchers 6 durch Relativbewegung zwischen dem ersten Anzugelement 10 und dem zweiten Anzugelement 18 in einer senkrecht zur axialen Richtung liegenden Richtung (senkrecht zur Darstellungsebene der Figs. 3A und 3B) in einen Eingriffszustand gemäß Figs. 3A und 3B bringbar ist. Im Eingriffszustand des ersten Anzugelements 10 und des zweiten Anzugelements 18 sind die Anzugelemente 10 und 18 bzw. der Werkzeugköcher 6 mit der Entriegelungseinrichtung 7 koaxial ausgerichtet, wie es in Figs. 3A und 3B dargestellt ist.

Insbesondere sind der erste Anzugabschnitt 10a und der zweite Anzugabschnitt 18a derart ausgebildet, dass sich der erste Anzugabschnitt 10a und der zweite Anzugabschnitt 18a senkrecht zur axialen Richtung (insbesondere senkrecht zur Darstellungsebene der Figs. 3A und 3B bzw. parallel zur Schwenkachse des Befestigungselements 14) nicht gegenseitig sperren bzw. in dieser Richtung gegenseitig frei beweglich zu einander ausgebildet sind.

Des Weiteren befinden sich der zweite Anzugabschnitt 18a und der erste Anzugabschnitt 10a im Eingriffszustand gemäß Figs. 3A und 3B in einem in axialer Richtung formschlüssig unverlierbaren Eingriff. "Unverlierbarer formschlüssiger Eingriff in axialer Richtung" bedeutet hierbei im Sinne der Erfindung, dass sich der zweite Anzugabschnitt 18a und der erste Anzugabschnitt 10a in axialer Richtung beidseitig durch jeweiligen gegenseitigen Formschluss sperren, wobei beispielhaft jedoch kein gleichzeitiger beidseitiger Formschluss vorhanden ist, so dass sich der erste Anzugabschnitt 18a und der zweite Anzugabschnitt 10a relativ zueinander in den Grenzen eines axialen Spielbereichs axial beweglich sind und eine über den axialen Spielbereich hinausgehende axiale Relativbewegung in den beiden axialen Richtungen formschlüssig unverlierbar gesperrt ist.

Im Ausführungsbeispiel gemäß Figs. 3A und 3B wird dies beispielhaft dadurch bewerkstelligt, dass der Anzugabschnitt 10a des Anzugelements 10 des Werkzeugköchers 6 einen aus dem Werkzeugköcher 6 axial hervorstehenden Anzugschaftabschnitt 10b und einen auf der dem Werkzeugköcher 6 abgewandten Seite des Anzugschaftabschnitt 10b angeordneten Anzugkopfabschnitt 10c aufweist. Beispielhaft ist dies in Figs. 3A und 3B durch ein T-förmiges Profil des Anzugabschnitts 10a realisiert.

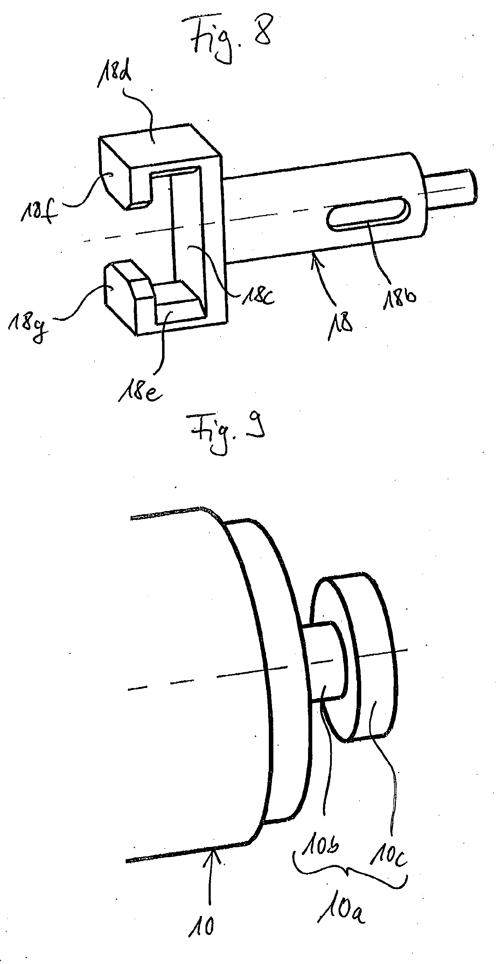

Der Anzugabschnitt 18a des Anzugelements 18 der Entriegelungseinrichtung 7 ist mit einem Greiferprofil (bzw. Klauenprofil) ausgebildet, das den Anzugkopfabschnitt 10c des Anzugabschnitts 10a des Anzugelements 10 des Werkzeugköchers 6 im Eingriffszustand umgreift und somit in axialer Richtung beidseitig sperrt. Weitere Details einer beispielhaften Ausgestaltung des Anzugabschnitts 18a des Anzugelements 18 der Entriegelungseinrichtung 7 werden weiter unten unter Bezugnahme auf Fig. 8 beschrieben.

Die Entriegelungseinrichtung 7 ist dazu geeignet, das Anzugelement 18 in axialer Richtung zu steuern. Somit ist es im Eingriffszustand möglich, das Anzugelement 10 des Werkzeugköchers 6 in axialer Richtung aus der zweiten Position gemäß Figs. 3A und 4A in die erste Position gemäß Figs. 3B und 4B zu bewegen und den im Werkzeugköcher 6 aufgenommenen Steilkegel 8 zu entriegeln (bzw. in weiteren Ausführungsbeispielen ggf. zudem das Anzugelement 10 des Werkzeugköchers 6 in axialer Richtung aus der ersten Position gemäß Figs. 3A und 4A in die zweite Position gemäß Figs. 3B und 4B zu bewegen und den im Werkzeugköcher 6 aufgenommenen Steilkegel 8 zu verriegeln). Hierbei wird das Entriegeln beispielhaft durch Anziehen des Anzugelements 10 in axialer Richtung zu der Entriegelungseinrichtung 7 hin bzw. von dem Werkzeugköcher 6 weg bewerkstelligt. Ein Verriegeln kann dahingegen beispielhaft durch ein Bewegen des Anzugelements 18 in axialer Richtung von der Entriegelungseinrichtung 7 weg bzw. zu dem Werkzeugköcher 6 hin bewerkstelligt werden, um es dem von dem Federelement 12 vorgespannten Anzugelement 10 zu ermöglichen, in die verriegelte erste Position zurückzukehren.

Wie bereits vorstehend erwähnt ist die Anzugeinrichtung 19 beispielhaft als Pneumatikzylinder ausgebildet. Hierbei ist beispielhaft ein Pneumatikanschluss 19a zum Ausführen einer Entriegelungsbewegung des Anzugelements 18 von dem Werkzeugköcher weg und ein Pneumatikanschluss 19b zum Ausführen einer Verriegelungsbewegung des Anzugelements 18 zu dem Werkzeugköcher hin vorgesehen. Jedoch ist die vorliegende Erfindung nicht auf Ausführungsbeispiele beschränkt, bei denen die Anzugeinrichtung 19 als ein Pneumatikzylinder oder eine andere pneumatikbetriebene Einrichtung ausgebildet ist, sondern neben einer Pneumatikansteuerung ist es weiterhin auch möglich, hydraulisch, elektrisch und/oder mechanisch betriebene Ansteuermechanismen vorzusehen.

Wie anhand von Figs. 3A und 3B ersichtlich wird, ist dieses Ausführungsbeispiel der Erfindung beispielhaft derart ausgebildet, dass das erste Anzugelement 10 mittels des sich mit dem ersten Anzugelements 10 im Eingriffszustand befindlichen zweiten Anzugelements 18 zum Entriegeln des in dem Werkzeugköcher 6 aufgenommenen und verriegelten Werkzeugkegels 8 von dem Werkzeugköcher 6 weg und hin zu der Entriegelungseinrichtung 7 gezogen wird. Da jedoch die Befestigung des Werkzeugköchers 6 über das Befestigungselement 14 beispielhaft schwenkbar erfolgt, weist der Werkzeugköcherkörper 13 weiterhin einen Stopperabschnitt 17a auf, der ein Stopperelement 17b hält. Wie in Figs. 4A und 4B beispielhaft gezeigt, ist das Stopperelement 17b zur Justierung um eine fixierbare Schwenkachse 17c rotierbar an dem Stopperabschnitt 17a gehalten.

Der Stopperabschnitt 17a und das Stopperelement 17b stehen auf der Seite des Werkzeugköchers 6, auf der auch der Anzugabschnitt 10a in axialer Richtung hervorsteht, in axialer Richtung hervor. Insbesondere steht der Stopperabschnitt 17a mit dem Stopperelement 17b weiter in axialer Richtung hervor als der Anzugabschnitt 10a des Anzugelements 10 des Werkzeugköchers 6.

Im Eingriffszustand liegt das Stopperelement 17b auf einer Stopperfläche 20a des Befestigungselements 20 des Werkzeugmagazins 2 auf (oder in alternativen Ausführungsbeispielen auch der Entriegelungseinrichtung selbst), so dass eine Schwenkbewegung des Werkzeugköchers 6 um die Schwenkachse des Befestigungselements 14 formschlüssig gesperrt ist, wenn das Anzugelement 10a mittels des Anzugelements 18 aus der ersten Position in die zweite Position bewegt wird.

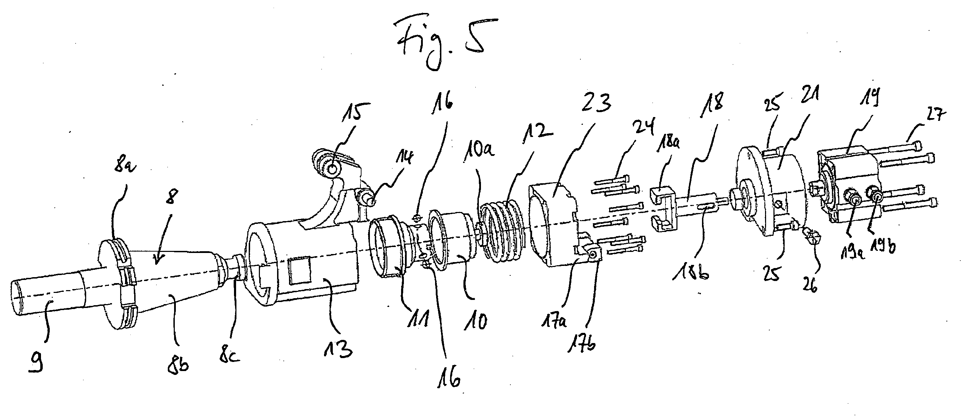

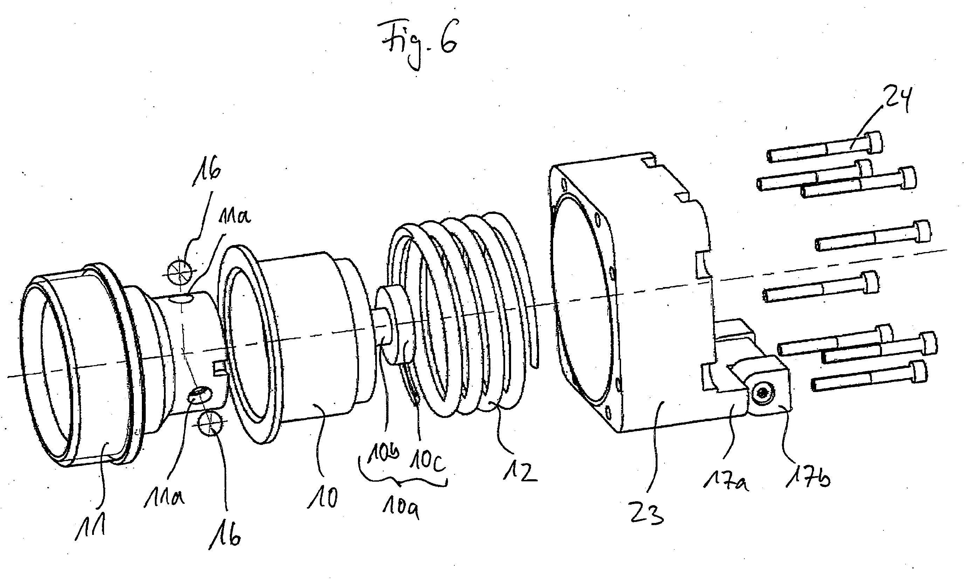

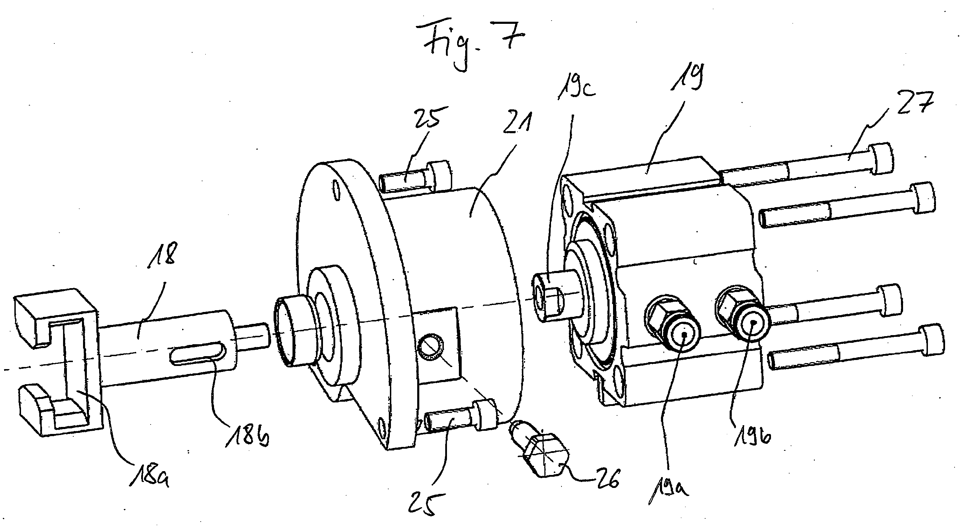

Fig. 5 zeigt eine Explosionsdarstellung des Werkzeugköchers 6 und der Entriegelungseinrichtung 7 aus Figs. 3A und 3B. Fig. 6 zeigt hierzu eine Detailansicht der Explosionsdarstellung des Werkzeugköchers 6 aus Fig. 5 und Fig. 7 zeigt hierzu eine Detailansicht der Explosionsdarstellung der Entriegelungseinrichtung 7 aus Fig. 5.

Wie in Figs. 5 und 6 beispielhaft gezeigt, kann das Halteelement 11 umfangseitig auch mehrere Haltelöcher 11a aufweisen, die dann jeweils ein radial bewegliches Kugelelement 16 halten. Zudem ist in Figs. 5 und 6 weiterhin beispielhaft gezeigt, dass der Verriegelungsmechanismus (umfassend das Halteelement 11, das eine oder die mehreren Kugelelemente 16, das Anzugelement und das Federelement 12) in eine Öffnung des Werkzeugköcherkörpers 13 eingesetzt wird/ist und mit einem Werkzeugköcherkörper-Abschlusselement 23, welches mittels Schrauben 24 am Werkzeugköcherkörper 13 befestigt wird/ist in dem Werkzeugköcherkörpers 13 fixiert wird. Beispielhaft umfasst das Werkzeugköcherkörper-Abschlusselement 23 den das Stopperelement 17b haltenden Stopperabschnitt 17a.

Wie in Figs. 5 und 7 beispielhaft gezeigt, kann das Befestigungselement 21 der Entriegelungseinrichtung 7 mittels Schrauben 25 an dem Werkzeugmagazin 2 befestigt werden, wohingegen die Anzugeinrichtung 19 beispielhaft mittels Schrauben 27 an dem Befestigungsmittel 21 befestigt wird. Das Anzugelement 18 wird mittels eines Befestigungselements 19c an der Anzugeinrichtung 19 befestigt. Weiterhin weist das Anzugelement 18 beispielhaft ein in axialer Richtung verlaufendes Langloch 18b auf, in welches eine in das Befestigungselement zu schraubende Schraube 26 hineinreicht und die axiale Bewegungsfreiheit des Anzugelements 18 in Anhängigkeit der Länge des Langlochs 18b beidseitig begrenzt.

Fig. 8 zeigt eine Perspektivansicht des zweiten Anzugelements 18 aus Fig. 7. Der Anzugabschnitt 18a des Anzugselements 18 umfasst auf der dem Anzugselement 10 abgewandten Seite bzw. auf der der Anzugeinrichtung 19 zugewandten Seite einen Wandabschnitt 18c, der sich in einer zur axialen Richtung senkrechten Ebene erstreckt.

Dieser Wandabschnitt 18c sperrt die axiale Bewegung des Anzugabschnitts 10a des Anzugelements 10 des Werkzeugköchers 6 in der axialen Richtung zu der Anzugeinrichtung 19 hin bzw. von dem Werkzeugköcher 6 weg und ermöglicht es somit, mittels eines Kontakts zwischen dem Wandabschnitt 18c und dem Anzugabschnitt 10a des Anzugelements 10 des Werkzeugköchers 6, den Anzugabschnitt 10a des Anzugelements 10 zu dem Werkzeugköcher 6 hin bzw. von der Anzugeinrichtung 19 weg zu bewegen, indem das Anzugelement 18 von der Anzugeinrichtung 19 zu dem Werkzeugköcher 6 hin gedrückt wird.

Weiterhin umfasst der Anzugabschnitt 18a des Anzugselements 18 zwei sich in einer senkrecht zur axialen Richtung liegenden zweiten Richtung gegenüberliegende, sich in axialer Richtung erstreckende Wandabschnitte 18d und 18e, die beispielhaft in zueinander und zur axialen Richtung parallelen Ebenen verlaufen.

Befindet sich der Anzugsabschnittskopf 10c des Anzugsabschnitts 10a des Anzugelements 10 im Eingriffszustand zwischen den Wandabschnitten 18d und 18e des Anzugabschnitts 18a des Anzugelements 18, so ist eine Bewegung des Anzugsabschnitts 10a in der zweiten Richtung (vertikal in Figs. 3A bis 4C) durch die Wandabschnitte 18d und 18e gesperrt. Die Wandabschnitte 18d und 18e gehen auf der der Anzugeinrichtung 19 zugewandten Seite in den Wandabschnitt 18c über.

Dahingegen ist auf zwei sich in einer senkrecht zur axialen Richtung und senkrecht zur zweiten Richtung liegenden ersten Richtung gegenüberliegende Seiten ohne sperrende Wandung ausgebildet.

Anders ausgedrückt ist eine Bewegung des Anzugsabschnitts 10a in der ersten Richtung nicht durch den Anzugabschnitt 18a gesperrt, selbst wenn sich der Anzugsabschnittskopf 10c des Anzugsabschnitts 10a zwischen den Wandabschnitten 18d und 18e befindet. Der Anzugsabschnitt 10a und der Anzugabschnitt 18a können somit in der ersten Richtung frei relativ zueinander bewegt werden (die erste Richtung entspricht hierbei der Richtung, die senkrecht zur Zeichenebene der Figs. 3A bis 4B liegt).

Weiterhin umfasst der Anzugabschnitt 18a des Anzugselements 18 auf der dem Anzugselement 10 zugewandten Seite bzw. auf der der Anzugeinrichtung 19 abgewandten Seite einen ersten Sperrabschnitt 18f und einen zweiten Sperrabschnitt 18g, wobei der erste Sperrabschnitt 18f in den Wandabschnitt 18d übergeht und der zweite Sperrabschnitt 18g in den Wandabschnitt 18e übergeht.

Wenn sich der Anzugsabschnittskopf 10c des Anzugsabschnitts 10a im Eingriffszustand zwischen den Wandabschnitten 18d und 18e befindet, sperren der erste Sperrabschnitt 18f und der zweite Sperrabschnitt 18g die axiale Bewegung des Anzugabschnitts 10a des Anzugelements 10 des Werkzeugköchers 6 in der axialen Richtung von der Anzugeinrichtung 19 weg bzw. zu dem Werkzeugköcher 6 hin und ermöglichen es somit, mittels eines Kontakts zwischen den Sperrabschnitten 18g und 18f und dem Anzugabschnitt 10a des Anzugelements 10 des Werkzeugköchers 6, den Anzugabschnitt 10a des Anzugelements 10 von dem Werkzeugköcher 6 weg bzw. zu der Anzugeinrichtung 19 hin zu bewegen, indem das Anzugelement 18 von der Anzugeinrichtung 19 von dem Werkzeugköcher 6 weg gezogen wird.

Die Sperrabschnitte 18g und 18f weisen einen Abstand voneinander auf, der größer ist als der Durchmesser des Anzugabschnittschafts 10b und kleiner als der Anzugabschnittkopf 10c, so dass der Anzugabschnittschaft 10b zwischen den Sperrabschnitten 18g und 18f in axialer Richtung hindurch ragen kann, die Sperrabschnitte 18g und 18f jedoch die axiale Bewegung des Anzugabschnittkopfs 10c sperren.

Fig. 9 zeigt eine Perspektivansicht des ersten Anzugelements 10 aus Fig. 6. Der Anzugabschnitt 10a des Anzugelements 10 weist endseitig auf der dem Werkzeugköcher 6 abgewandten Seite den Anzugabschnittschaft 10b und den daran endseitig anschließenden Anzugabschnittkopf 10c auf.

Wie bereits vorstehend beschrieben ist der Durchmesser des Anzugabschnittschafts 10b kleiner als der Abstand der Sperrabschnitte 18g und 18f, so dass der Anzugabschnittschaft 10b zwischen den Sperrabschnitten 18g und 18f in axialer Richtung hindurch ragen kann, und der Durchmesser des Anzugabschnittkopfs 10c ist größer als der Abstand der Sperrabschnitte 18g und 18f, so dass die Sperrabschnitte 18g und 18f die axiale Bewegung des Anzugabschnittkopfs 10c sperren. Zudem ist die axiale Breite des Anzugabschnittkopfs 10c kleiner als der Abstand der Sperrabschnitte 18g und 18f zu dem Wandabschnitt 18c in axialer Richtung. Die axiale Länge des Anzugabschnittschafts 10b ist größer als die axiale Breite der Sperrabschnitte 18g und 18f. Somit kann auf einfache Weise gewährleistet werden, dass ein Eingriffszustand des ersten Anzugabschnitts 10a mit dem zweiten Anzugabschnitt 18a gemäß Figs. 3A bis 4B ermöglicht ist.

In alternativen Ausführungsbeispielen ist es möglich, nur einen der Sperrabschnitte 18g und 18f an dem Anzugelement 18 bereitzustellen. Weiterhin wäre es möglich, statt des Anzugabschnitts 10a mit einem T-förmigen Profil einen Anzugabschnitt 10a mit einem L-förmigen Profil vorzusehen. In weiteren Ausführungsbeispielen ist es möglich, das Anzugselement des Werkzeugköchers 6 gemäß dem Anzugelement gemäß Fig. 8 auszubilden und das Anzugelement der Entriegelungseinrichtung 7 gemäß dem Anzugelement gemäß Fig. 9 auszubilden.

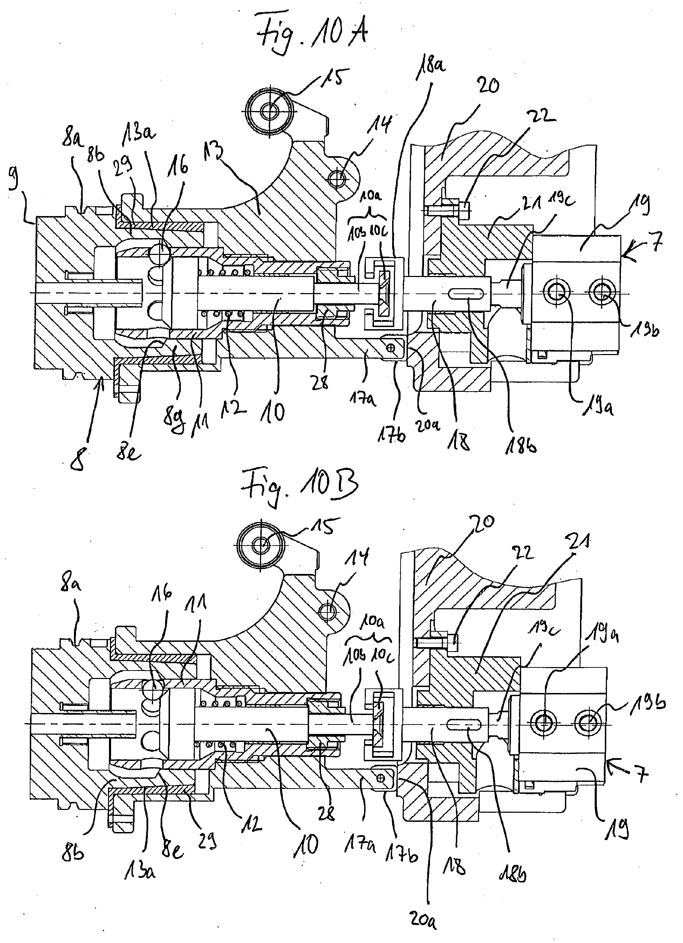

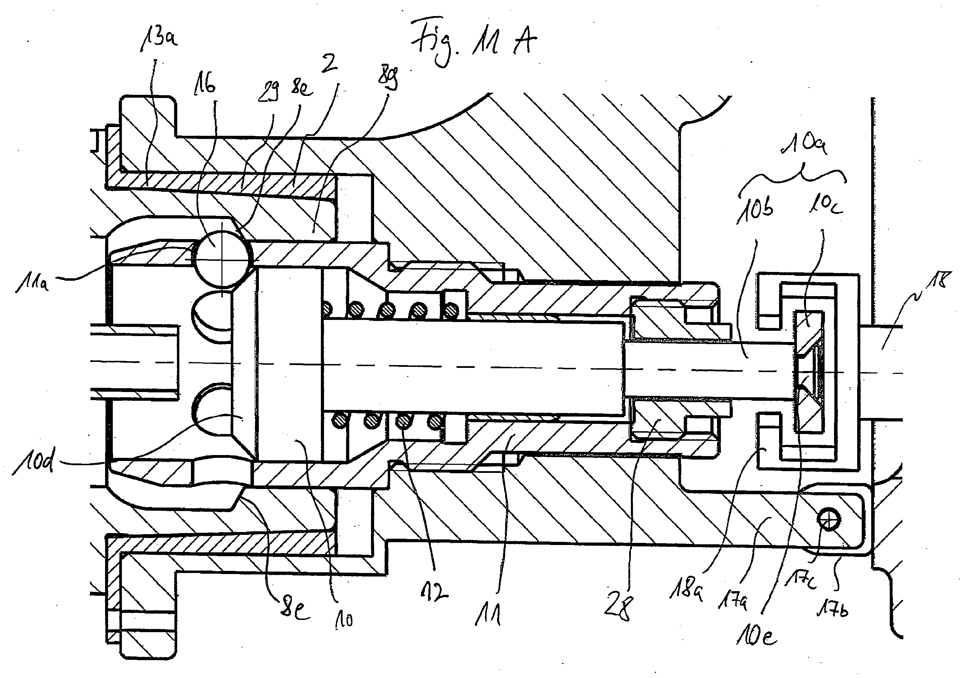

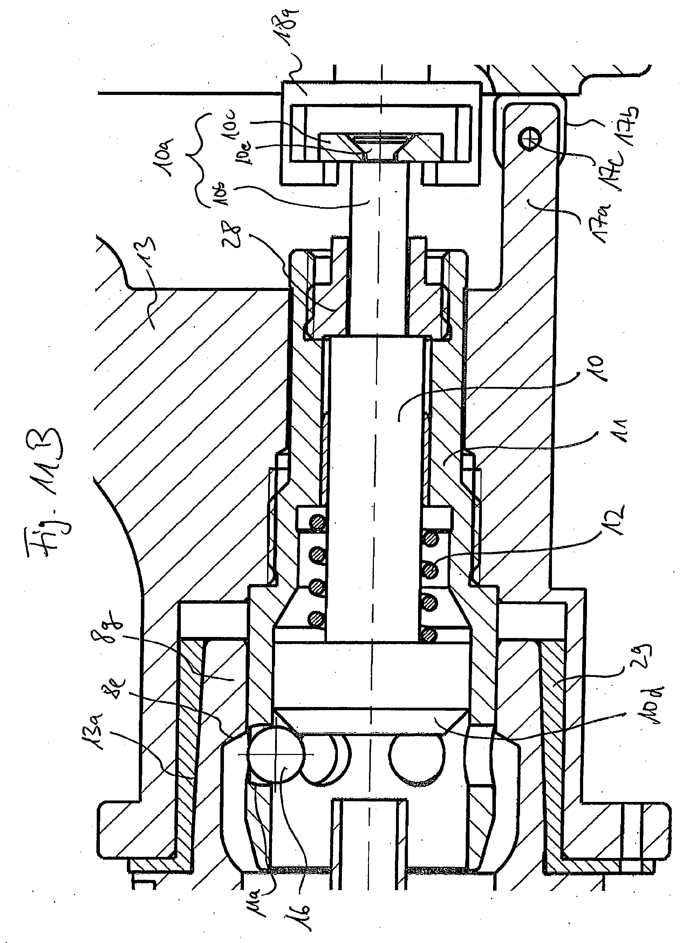

Fig. 10A zeigt eine Schnittansicht entlang der axialen Richtung eines Werkzeugköchers 6 mit verriegeltem Werkzeugkegel 8 und einer Entriegelungseinrichtung 7 nach einem zweiten Ausführungsbeispiel der vorliegenden Erfindung und Fig. 10B zeigt eine Schnittansicht entlang der axialen Richtung des Werkzeugköchers 6 mit entriegeltem Werkzeugkegel 8 und der Entriegelungseinrichtung 7 nach dem zweiten Ausführungsbeispiel der vorliegenden Erfindung. Fig. 11A zeigt eine Detailansicht aus Fig. 10A und Fig. 11B zeigt eine Detailansicht aus Fig. 10B.

In der folgenden Beschreibung des zweiten Ausführungsbeispiels werden insbesondere die Unterschiede der Ausführungsbeispiele beschrieben. Gleiche oder ähnliche Merkmale werden nicht erneut beschrieben und es kann die Beschreibung des ersten Ausführungsbeispiels herangezogen werden. Insbesondere ist die Entriegelungseinrichtung 7 des zweiten Ausführungsbeispiels gleich ausgebildet, wie die vorstehend beschriebene Entriegelungseinrichtung 7 des ersten Ausführungsbeispiels. Im Gegensatz zu der Werkzeugaufnahmeöffnung 13a des ersten Ausführungsbeispiels ist die Werkzeugaufnahmeöffnung 13a des Werkzeugköchers 6 gemäß des zweiten Ausführungsbeispiels dazu eingerichtet, einen Werkzeugkegel 8 aufzunehmen, der als Hohlschaftkegel (HSK) ausgebildet ist.

Ein Werkzeug 9 ist in einem Hohlschaftkegel 8 mit einer Greiferrille 8a (auch Greifernut genannt) und einem Hohlschaftkegelkörper 8b eingesetzt. Wie in den Fig. 11A und 11B besser erkennbar ist, weist der Hohlschaftkegelkörper 8b auf der Innenwandung umfänglich eine Spannfläche 8e auf.

Der Hohlschaftkegelkörper 8b ist in der Aufnahmeöffnung 13a des Werkzeugköcherkörpers 13 des Werkzeugköchers 6 aufgenommen und befindet sich in einem umfänglichen Formschluss des Hohlschaftkegelkörper 8b mit der umfänglichen Wandung der Aufnahmeöffnung 13a des Werkzeugköcherkörpers 13 und aufgrund der sich verjüngenden äußeren Form des Hohlschaftkegelkörpers 8b und der Wandung der Aufnahmeöffnung 13a des Werkzeugköcherkörpers 13 weiterhin in einem einseitigen Formschluss in axialer Richtung, der zudem durch den Kontakt der Plananlage des Hohlschaftkegels 8 mit dem Werkzeugköcher 6 bereitgestellt wird. Somit erlaubt die Formschlussverbindung zwischen dem Hohlschaftkegelkörper 8b und der umfänglichen Wandung der Aufnahmeöffnung 13a des Werkzeugköcherkörpers 13 in der aufgenommenen Stellung gemäß Figs. 10B und 11B nur eine Entnahme des Hohlschaftkegels 8 in axialer Richtung nach außen (d.h. nach links in Figs. 10B und 11B). Die axiale Richtung ist in Figs. 10A und 10B durch die gestrichelte horizontale Linie gekennzeichnet.

Der Werkzeugköcher 6 umfasst weiterhin einen Verriegelungsmechanismus zum Verriegeln des in dem Werkzeugköcher 6 aufgenommenen Werkzeugs. Der Verriegelungsmechanismus umfasst ein Halteelement 11, ein Anzugelement 10, ein Kugelelement 16 und ein Federelement 12. Figs. 10A und 11A zeigen den Verriegelungsmechanismus im verriegelten Zustand und Figs. 10B und 11B zeigen den Verriegelungsmechanismus im entriegelten Zustand.

Das Halteelement 11 ist in den Innenraum des Hohlschaftkörpers 8b eingeführt, dessen Endabschnitt das Halteelement 11 umfänglich umschließt. Somit ist der Hohlschaftkegel 8 sowohl in axialer als auch in radialer Richtung fixiert in dem Werkzeugköcherkörper 13 angeordnet. Das Halteelement 11 umfasst ein in radialer Richtung verlaufendes Halteloch 11a in dem das Kugelelement 16 radial beweglich gehalten ist. Der Durchmesser des Kugelelements 16 ist größer als die Tiefe des Haltelochs 11a. Zudem kann sich der Durchmesser des das Kugelelement 16 aufnehmenden Haltelochs 11a nach außen hin verjüngen, um ein Durchrutschen des Kugelelements 16 nach außen zu verhindern, wenn kein Hohlschaftkegel 8 in dem Werkzeugköcher 6 aufgenommen ist.

Das Anzugelement 10 wird von dem Halteelement 11 umfänglich umschlossen und ist in radialer Richtung fixiert in dem Werkzeugköcherkörper 13 bzw. in dem Halteelement 11 angeordnet. Jedoch ist das Anzugelement 10 relativ zu dem Halteelement 11 in axialer Richtung beweglich in dem Werkzeugköcherkörper 13 angeordnet. Insbesondere kann das Anzugelement 10 in axialer Richtung zwischen einer ersten Position gemäß Figs. 10A und 11A und einer zweiten Position gemäß Figs. 10B und 11B bewegt werden.

Das Federelement 12 spannt das Anzugelement 10 aus der zweiten Position hin zu der ersten Position vor, d.h. das Federelement 12 erzeugt eine auf das Anzugelement 10 wirkende Rückstellkraft hin zu der ersten Position, wenn sich das Anzugelement 10 in der zweiten Position befindet. Das heißt, dass die Rückstellkraft des Federelements in Figs. 10B und 11B nach links wirkt, wobei das Anzugelement 10 die erste Position in Figs. 10A und 11A einnimmt und die zweite Position in Figs. 10B und 11B einnimmt.

Das Anzugelement 10 ist derart ausgebildet, dass sich der Außendurchmesser des Anzugelements 10 im Bereich des in der ersten und zweiten Position dem Halteloch 11a benachbarten bzw. angrenzenden Abschnitts des Anzugelements 10 in einer Richtung von der ersten Position zur zweiten Position hin (d.h. in Figs. 10A bis 11B von links nach rechts) vergrößert. Beispielhaft weist die Außenwandung des Halteelements 10 hierzu im Bereich des in der ersten und zweiten Position dem Halteloch 11a benachbarten bzw. angrenzenden Abschnitts des Anzugelements 10 einen Teilkegelabschnitt 10d auf.

Die Außenwandung des Halteelements 10 mit dem Teilkegelabschnitt 10d ist hierbei insbesondere derart ausgebildet, dass das Kugelelement 16 von dem Teilkegelabschnitt 10d radial nach außen in dem Halteloch 11a bewegt wird, wenn das Anzugelement aus der zweiten Position hin zur ersten Position bewegt wird (d.h., wenn das Anzugelement in Fig. 10B nach links bewegt wird).

Bei in der Aufnahmeöffnung 13a des Werkzeugköcherkörpers 13 aufgenommenem Hohlschaftkegel 8 drückt der Teilkegelabschnitt 10d des Anzugelements 10 das Kugelelement 16 durch das Halteloch 11a gegen die Spannfläche 8e des Hohlschaftkörpers 8b des Hohlschaftkegels 8, wenn sich das Anzugelement 10 in der ersten Position befindet (siehe Figs. 10A und 11A). In dieser ersten Position ist der Hohlschaftkegel 8 in dem Werkzeugköcher 6 verriegelt, da das nach außen gedrückte Kugelelement 16 den Hohlschaftkörper 8b des Hohlschaftkegels 8 klemmt und axial fixiert bzw. verriegelt.

Wird dahingegen das Anzugelement 10 von der ersten Position in die zweite Position bewegt, ermöglicht die Ausbildung der Außenwandung des Anzugelements 10 es dem Kugelelement 16, radial nach innen auszuweichen bis der Hohlschaftkörper 8b bzw. die Spannfläche 8e freigegeben ist bzw. nicht mehr von dem Kugelelement 16 gesperrt ist, wie es in Figs. 10B und 11B dargestellt ist. In dieser zweiten Position ist der Hohlschaftkegel 8 in dem Werkzeugköcher 6 entriegelt, da das nach innen ausweichende Kugelelement 16 den Hohlschaftkörper 8b nicht mehr klemmt und axial nicht mehr fixiert.

Weiterhin umfasst das Anzugelement 10 endseitig einen Anzugabschnitt 10a, der auf der der Aufnahmeöffnung 13a des Werkzeugköcherkörpers 13 gegenüberliegenden Seite analog zu dem ersten Ausführungsbeispiel aus dem Werkzeugköcher hervorsteht. Dies ermöglicht es vorteilhaft, dass der Anzugabschnitt 10a des Anzugelements 10 von außen einfach zugänglich ist und gesteuert bewegt werden kann, insbesondere um das Anzugelements 10 von der ersten Position in die zweite Position bzw. von der zweiten Position in die erste Position zu steuern, um den Hohlschaftkegel 8 auf einfache Weise mittels einer separaten Entriegelungseinrichtung ent- bzw. verriegeln zu können.

Auch im zweiten Ausführungsbeispiel gemäß Figs. 10A und 10B weist der Anzugabschnitt 10a des Anzugelements 10 des Werkzeugköchers 6 einen aus dem Werkzeugköcher 6 axial hervorstehenden Anzugschaftabschnitt 10b und einen auf der dem Werkzeugköcher 6 abgewandten Seite des Anzugschaftabschnitt 10b angeordneten Anzugkopfabschnitt 10c auf. Jedoch ist der Anzugabschnitt 10a zusammenbaubedingt zweiteilig ausgeführt, wobei der Anzugkopfabschnitt 10c mittels einer Schraube 10e am Anzugschaftabschnitt 10b befestigt ist.

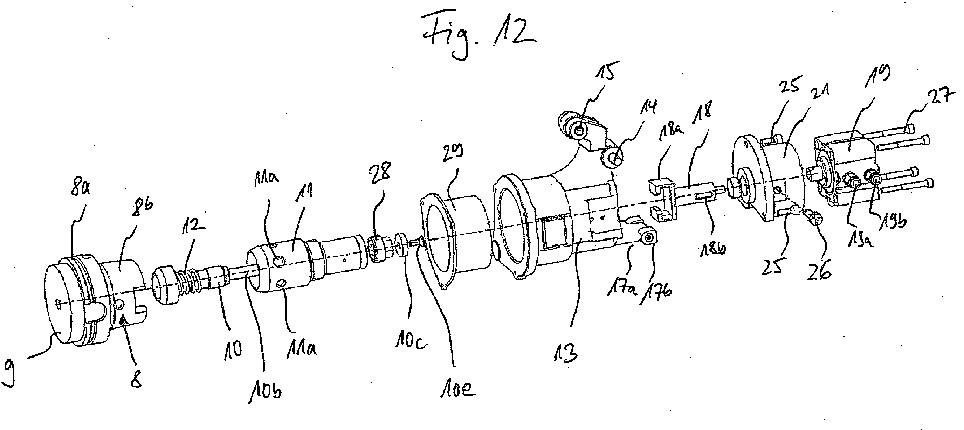

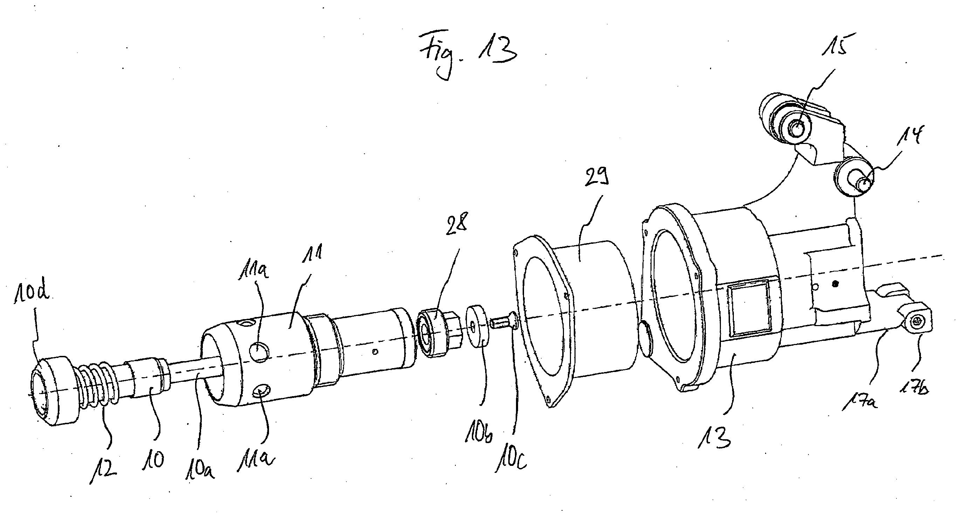

Fig. 12 zeigt eine Explosionsdarstellung des Werkzeugköchers 6 und der Entriegelungseinrichtung 7 nach dem zweiten Ausführungsbeispiel der vorliegenden Erfindung und Fig. 13 zeigt eine Detailansicht der Explosionsdarstellung des Werkzeugköchers 6 aus Fig. 12.

Hierbei wird ersichtlich, dass der Verriegelungsmechanismus ein zusätzliches Stopperelement 28 aufweist, das die axiale Bewegung des Anzugelements 10 in eine Richtung von der zweiten Position in die erste Position begrenzt, wobei das Anzugelement 10 in der ersten Position mit dem Stopperelement 28 in Kontakt ist (siehe auch z.B. Figs. 11A und 11B).

Zudem ist ein Aufnahmeelement 29 gezeigt, dass die Aufnahmeöffnung 13a aufweist und in eine Öffnung des Werkzeugköcherkörpers 13 eingeführt wird (siehe auch Figs. 10A bis 11B). Das Aufnahmeelement 29 kann z.B. gewechselt werden, um unterschiedliche Hohlschaftkörper 8b mit unterschiedlichen Durchmessern im gleichen Werkzeugköcherkörper 13 aufnehmen zu können.

### Bezugszeichenliste

- 1: Werkzeugmaschine
- 2: Werkzeugmagazin

- 2a: Kettenrad
- 2b: steuerbare Rundachse
- 2c: vertikal verfahrbares Greiferelement

- 3: Spindelträger
- 4: Spindel
- 5: Werkzeugwechsler

- 5a: Doppelgreiferarm
- 5b: Greiferabschnitt des Doppelgreiferarms
- 5c: Greiferabschnitt des Doppelgreiferarms
- 5d: steuerbare Rundachse

- 6: Werkzeugköcher

- 6a: Werkzeugköcher (an der Werkzeugwechselposition)
- 6b: Werkzeugköcher (an der Entriegelungsposition bzw. Eingabeposition)

- 7: Entriegelungseinrichtung
- 8: Werkzeugkegel (SK bzw. HSK)

- 8a: Greiferrille
- 8b: Steilkegelschaft bei SK bzw. Hohlschaftkörper bei HSK
- 8c: Anzugbolzen bei SK
- 8d: Anzugbolzenschaft bei SK
- 8e: Spannfläche bei SK und HSK
- 8f: Anzugbolzenkopf bei SK
- 8g: Endabschnitt bei HSK

- 9: Werkzeug
- 10: Anzugelement (,erstes)

- 10a: Anzugabschnitt (,erster)
- 10b: Anzugabschnittschaft
- 10c: Anzugabschnittkopf
- 10d: Teilhohlkegelabschnitt bei SK bzw. Teilkegelabschnitt bei HSK
- 10e: Schraube

- 11: Halteelement

- 11a: Halteloch (Haltelöcher)
- 11b: Endabschnitt

- 12: Federelement
- 13: Werkzeugköcherkörper

- 13a: Aufnahmeöffnung
- 13b: Befestigungsabschnitt
- 13c: Führungsabschnitt

- 14: Befestigungsstift/Befestigungselement
- 15: Führungselement
- 16: Kugelelement(e)
- 17a: Stopperabschnitt
- 17b: Stopperelement
- 17c: fixierbare Schwenkachse
- 18: Anzugelement (, zweites)

- 18a: Anzugabschnitt (, zweiter)
- 18b: Langloch
- 18c: axial sperrender Wandabschnitt
- 18d: radial sperrender Wandabschnitt
- 18e: radial sperrender Wandabschnitt
- 18f: axial sperrender Sperrabschnitt
- 18g: axial sperrender Sperrabschnitt

- 19: Anzugeinrichtung

- 19a: Pneumatikanschluss
- 19b: Pneumatikanschluss
- 19c: Befestigungselement

- 20: Befestigungsabschnitt
- 20a: Stopperfläche
- 21: Befestigungselement
- 22: Schraube
- 23: Abschlusselement
- 24: Schrauben
- 25: Schrauben
- 26: Schraube
- 27: Schrauben
- 28: Stopperelement
- 29: Aufnahmeelement

## Patentansprüche

1. Werkzeugmagazin für eine Werkzeugmaschine, mit
einem Werkzeugköcherbefestigungsmittel,
einer Mehrzahl von an dem Werkzeugköcherbefestigungsmittel befestigten Werkzeugköchern (6) zum Aufnehmen und Verriegeln eines jeweiligen Werkzeugkegels (8) an dem Werkzeugmagazin (2),
einer Entriegelungseinrichtung (7) zum Entriegeln eines in einem der Werkzeugköcher (6) aufgenommenen und verriegelten Werkzeugkegels (8) an einer Entriegelungsposition des Werkzeugmagazins (2), und
einer Verfahreinrichtung zum Verfahren der an dem Werkzeugköcherbefestigungsmittel befestigten Werkzeugköcher (6),
wobei die Verfahreinrichtung dazu eingerichtet ist, einen ersten Werkzeugköcher (6), der an dem Werkzeugköcherbefestigungsmittel befestigt ist, in einer ersten Richtung senkrecht zur axialen Richtung des ersten Werkzeugköchers (6) in die Entriegelungsposition zu verfahren;
wobei der erste Werkzeugköcher (6):
- ein Aufnahmemittel (13) zur Aufnahme eines Werkzeugkegels (8) in axialer Richtung des ersten Werkzeugköchers (6) auf einer ersten Seite des ersten Werkzeugköchers (6),
- ein Verriegelungsmittel (10,11, 12, 16) zur Verriegelung des in dem Aufnahmemittel (13) aufgenommenen Werkzeugkegels (8) und
- ein erstes Befestigungsmittel (14) zur Befestigung des ersten Werkzeugköchers (6) an dem Werkzeugmagazin (2)
umfasst;
wobei das Verriegelungsmittel (10,11, 12, 16) ein in axialer Richtung bewegliches erstes Anzugelement (10) umfasst, das dazu eingerichtet ist, aus einer ersten Position in axialer Richtung in eine zweite Position bewegt zu werden, wobei der in dem Aufnahmemittel (13) aufgenommene Werkzeugkegel (8) verriegelt ist, wenn das erste Anzugelement (10) sich in der ersten Position befindet, und der in dem Aufnahmemittel (13) aufgenommene Werkzeugkegel (8) entriegelt ist, wenn das erste Anzugelement (10) sich in der zweiten Position befindet, und
wobei das erste Anzugelement (10) einen ersten Anzugabschnitt (10a) aufweist, der auf einer der ersten Seite des ersten Werkzeugköchers (6) gegenüberliegenden zweiten Seite in axialer Richtung aus dem ersten Werkzeugköcher (6) hervorsteht; und
wobei die Entriegelungseinrichtung (7):
- ein zweites Befestigungsmittel (21, 22) zur Befestigung der Entriegelungseinrichtung (7) an dem Werkzeugmagazin (2) an der Entriegelungsposition des Werkzeugmagazins (2) und
- ein Entriegelungsmittel (18, 19) zum Entriegeln des in dem ersten Werkzeugköcher (6) aufgenommenen und verriegelten Werkzeugkegels (8), wenn sich der erste Werkzeugköcher (6) an der Entriegelungsposition befindet,
umfasst;
wobei das Entriegelungsmittel (18, 19) ein in axialer Richtung der Entriegelungseinrichtung (7) bewegliches zweites Anzugelement (18) umfasst, das einen zweiten Anzugabschnitt (18a) aufweist, der mit dem ersten Anzugabschnitt (10a) des ersten Anzugelements (10) in einen Eingriffszustand bringbar ist, bei dem sich der zweite Anzugabschnitt (18a) mit dem ersten Anzugabschnitt (10a) des ersten Anzugelements (10) in einem in axialer Richtung formschlüssig unverlierbaren Eingriff befindet, wenn sich der Werkzeugköcher (6) an der Entriegelungsposition befindet, und
wobei das Entriegelungsmittel (18, 19) dazu eingerichtet ist, den in dem Aufnahmemittel (13) aufgenommenen Werkzeugkegel (8) zu entriegeln, wenn sich der erste Anzugabschnitt (10a) und der zweite Anzugabschnitt (18a) in dem Eingriffszustand befinden, indem das zweite Anzugelement (18) axial gesteuert wird und über die axiale formschlüssige Verbindung das erste Anzugelement (10) von der ersten axialen Position in die zweite axiale Position bewegt; und
wobei der zweite Anzugabschnitt (18a) derart ausgebildet ist, dass er durch eine Relativbewegung zu dem ersten Anzugabschnitt (10a) in einer ersten Richtung senkrecht zur axialen Richtung in den Eingriffszustand mit dem ersten Anzugabschnitt (10a) bringbar ist, wenn die Verfahreinrichtung den ersten Werkzeugköcher (6) in der ersten Richtung senkrecht zur axialen Richtung des ersten Werkzeugköchers (6) in die Entriegelungsposition verfährt.

2. Werkzeugmagazin nach Anspruch 1, **dadurch gekennzeichnet, dass**
der erste Anzugabschnitt (10a) des ersten Werkzeugköchers (6) einen endseitigen Anzugkopf (10c) aufweist, der dazu ausgebildet ist, mit dem zweiten Anzugabschnitt (18a) den in axialer Richtung formschlüssig unverlierbaren Eingriff einzunehmen, wenn der erste und der zweite Anzugabschnitt (10a, 18a) sich in dem Eingriffszustand befinden.

3. Werkzeugmagazin nach Anspruch 1 oder 2, **dadurch gekennzeichnet, dass**
der erste Anzugabschnitt (10a) des ersten Werkzeugköchers (6) in axialer Richtung ein T-förmiges Profil oder ein L-förmiges Profil aufweist.

4. Werkzeugmagazin nach einer der vorhergehenden Ansprüche, **dadurch gekennzeichnet, dass**
der erste Werkzeugköcher (6) weiterhin einen ersten Stopperabschnitt (17a, 17b) umfasst, der auf der zweiten Seite des ersten Werkzeugköchers (6) angeordnet ist,
wobei der Stopperabschnitt ein Stopperelement (17b) aufweist, das auf der zweiten Seite des ersten Werkzeugköchers (6) in axialer Richtung aus dem ersten Werkzeugköcher hervorsteht.

5. Werkzeugmagazin nach Anspruch 4, **dadurch gekennzeichnet, dass**
das Stopperelement (17b) weiter aus dem ersten Werkzeugköcher (6) hervorsteht als der erste Anzugabschnitt (10a).

6. Werkzeugmagazin nach einem der vorhergehenden Ansprüche, **dadurch gekennzeichnet, dass**
das erste Befestigungsmittel (14) des ersten Werkzeugköchers (6) dazu eingerichtet ist, den ersten Werkzeugköcher (6) um eine senkrecht zur axialen Richtung des ersten Werkzeugköchers (6) angeordneten Achse schwenkbar an dem Werkzeugmagazin (2) zu befestigen.

7. Werkzeugmagazin nach einem der vorhergehenden Ansprüche, **dadurch gekennzeichnet, dass**
das Verriegelungsmittel (10, 11, 12, 16) des ersten Werkzeugköchers (6) weiterhin ein Halteelement (11) umfasst, das ein radial bewegliches Verriegelungselement (16) hält,
wobei das erste Anzugelement (10) des ersten Werkzeugköchers (6) das Verriegelungselement (16) in radialer Richtung in eine Spannposition zwingt, in der das Verriegelungselement (16) zur Verriegelung des Werkzeugkegels (8) gegen eine Spannfläche (8e) des in dem Aufnahmemittel (13) aufgenommenen Werkzeugkegels (8) drückt, wenn sich das erste Anzugelement (10) in der ersten Position befindet.

8. Werkzeugmagazin nach Anspruch 7, **dadurch gekennzeichnet, dass**
das Verriegelungselement (16) des ersten Werkzeugköchers (6) in radialer Richtung zwischen der Spannposition und einer Löseposition beweglich ist, wenn sich das erste Anzugelement in der zweiten Position befindet, wobei das Verriegelungselement (16) in der Löseposition nicht mit der Spannfläche (8e) des Werkzeugkegels (8) des ersten Werkzeugköchers (6) in Kontakt ist.

9. Werkzeugmagazin nach Anspruch 7 oder 8, **dadurch gekennzeichnet, dass**
das Aufnahmemittel (13) des ersten Werkzeugköchers (6) dazu eingerichtet ist, einen als Steilkegel ausgebildeten Werkzeugkegel (8) aufzunehmen, der einen endseitigen Anzugkolben (8c) aufweist,
wobei das erste Anzugelement (10) das Verriegelungselement (16) in radialer Richtung nach innen in die Spannposition zwingt, in der das Verriegelungselement (16) zur Verriegelung des in dem Aufnahmemittel (13) aufgenommenen Steilkegels (8) in radialer Richtung nach innen gegen die Spannfläche (8e) des Anzugkolbens (8c) des Steilkegels (8d) drückt, wenn sich das erste Anzugelement (10) in der ersten Position befindet; oder
das Aufnahmemittel (13) des ersten Werkzeugköchers (6) dazu eingerichtet ist, einen als Hohlschaftkegel ausgebildeten Werkzeugkegel (8) aufzunehmen, der eine innenseitige Spannfläche (8e) im Inneren des Hohlschafts (8b) des Hohlschaftkegels (8) aufweist,
wobei das erste Anzugelement (10) das Verriegelungselement (16) in radialer Richtung nach außen in die Spannposition zwingt, in der das Verriegelungselement (16) zur Verriegelung des in dem Aufnahmemittel (13) aufgenommenen Hohlschaftkegels (8) in radialer Richtung nach außen gegen die innenseitige Spannfläche (8e) des Hohlschaftkörpers (8b) des Hohlschaftkegels (8) drückt, wenn sich das erste Anzugelement (10) in der ersten Position befindet.

10. Werkzeugmagazin nach einem der vorhergehenden Ansprüche, **dadurch gekennzeichnet, dass**
das Verriegelungsmittel (10, 11, 12, 16) des ersten Werkzeugköchers (6) weiterhin ein Federelement (12) umfasst, das dazu eingerichtet ist, eine Rückstellkraft von der zweiten Position hin zu der ersten Position auf das erste Anzugelement (10) auszuüben.

## Claims

1. A tool magazine for a machine tool, comprising:
a tool holder fastening means,
a plurality of tool holders (6) fastened to said tool holder fastening means for receiving and locking a respective tool taper (8) on a tool magazine (2),
an unlocking device (7) for unlocking a tool taper (8) that is received and locked in said tool holder (6) at an unlocking position of said tool magazine (2), and
a displacing device for displacing said tool holder (6) fastened to said tool holder fastening means,
wherein said displacing device is adapted to displace a first tool holder (6) that is fastened to said tool holder fastening means in a first direction perpendicular to the axial direction of said first tool holder (6) into said unlocking position;
wherein said first tool holder (6) comprises:
- a receiving means (13) for receiving a tool taper (8) in the axial direction of said first tool holder (6) on a first side of said first tool holder (6);
- a locking means (10, 11, 12, 16) for locking said tool taper (8) received in said receiving means (13); and
- a first fastening means (14) for fastening said first tool holder (6) to said tool magazine (2),
wherein said locking means (10, 11, 12, 16) comprises a first tightening element (10) that is adapted to be moved from a first position in the axial direction into a second position, a tool taper (8) received in said receiving means (13) being locked when said first tightening element (10) is in the first position, and said tool taper (8) received in said receiving means (13) being unlocked when said first tightening element (10) is in the second position, and
wherein said first tightening element (10) has a first tightening portion (10a) that projects on a second side opposing the first side of said first tool holder (6) from said first tool holder (6) in the axial direction; and
wherein said unlocking device (7) comprises:
- a second fastening means (21, 22) for fastening said unlocking device (7) to said tool magazine (2) at an unlocking position of said tool magazine (2); and
an unlocking means (18, 19) for unlocking said tool taper (8) that is received and locked in said first tool holder (6) when said first tool holder (6) is at the unlocking position,
wherein said unlocking means (18, 19) comprises a second tightening element (18) that is movable in the axial direction of said unlocking device (7) and has a second tightening portion (18a) that can be brought into an engagement state with said first tightening portion (10a) of said first tightening element (10), in which said second tightening portion (18a) is in positive non-detachable engagement in the axial direction with said first tightening portion (10a) of said first tightening element (10) when said tool holder (6) is at the unlocking position, and
wherein said unlocking means (18, 19) is adapted to unlock said tool taper (8) received in said receiving means (13) when said first tightening portion (10a) and said second tightening portion (18a) are in the engagement state, in that said second tightening element (18) is axially controlled and, via the axial positive connection, moves said first tightening element (10) from said first axial position into said second axial position; and
wherein said first tightening portion (18a) is configured such that it can be brought into the engagement state with said second tightening portion (10a) by a relative movement with respect to said second tightening portion (10a) in a first direction perpendicular to the axial direction, when said displacing device displaces said first tool holder (6) in the first direction perpendicular to the axial direction of said first tool holder (6) into the unlocking position.

2. The tool magazine according to claim 1, **characterized in that**
said first tightening portion (10a) of said first tool holder (6) has a tightening head (10c) at the end that is configured to adopt the positive non-detachable engagement in the axial direction with said second tightening portion (18a) when the first and the second tightening portion (10a, 18a) are in the engagement state.

3. The tool magazine according to claim 1 or 2, **characterized in that**
said first tightening portion (10a) of said first tool holder (6) has a T-shaped profile or an L-shaped profile in the axial direction.

4. The tool magazine according to any one of the preceding claims, **characterized in that**
said first tool holder (6) further comprises a first stopper portion (17a, 17b) arranged on the second side of said first tool holder (6),
wherein said first stopper portion has a stopper element (17b) that projects from said first tool holder in the axial direction on the second side of said first tool holder (6).

5. The tool magazine according to claim 4, **characterized in that**
said stopper element (17b) projects from said first tool holder (6) farther than said first tightening portion (10a).

6. The tool magazine according to any one of the preceding claims, **characterized in that**
said first fastening means (14) of said first tool holder (6) is adapted to fasten said first tool holder (6) to said tool magazine so as to be pivotable about an axis arranged perpendicular to the axial direction of said first tool holder (6).

7. The tool magazine according to any one of the preceding claims, **characterized in that**
said locking means (10, 11, 12, 16) further comprises a holding element (11) holding a radially movable locking element (16),
wherein said first tightening element (10) of said first tool holder (6) forces said locking element (16) in the radial direction into a clamping position, in which said locking element (16), in order to lock said tool taper (8), presses against a clamping face (8e) of said tool taper (8) received in said receiving means (13) when said first tightening element (10) is in the first position.

8. The tool magazine according to claim 7, **characterized in that**
said locking element (16) of said first tool holder (6) is movable in the radial direction between the clamping position and a release position when said first tightening element is in the second position, said locking element (16) not being in contact with said clamping face (8e) of said tool taper (8) of said first tool holder (6) in the release position.

9. The tool magazine according to claim 7 or 8, **characterized in that**
said receiving means (13) of said first tool holder (6) is adapted to receive a tool taper (8) configured as a steep taper that has an end tightening piston (c),
wherein said first tightening element (10) forces said locking element (16) inwardly in the radial direction into the clamping position, in which said locking element (16), in order to lock said steep taper (8) received in said receiving means (13), presses inwardly in the radial direction against said clamping face (8e) of said tightening piston (8c) of said steep taper (8d) when said first tightening element (10) is in the first position; or
said receiving means (13) of said first tool holder (6) is adapted to receive a tool taper (8) configured as a hollow shaft taper that has an inner clamping face (8e) in the interior of the hollow shaft (8b) of said hollow shaft taper (8),
herein said first tightening element (10) forces said locking element (16) outwardly in the radial direction into the clamping position, in which said locking element (16), in order to lock said hollow shaft taper (8) received in said receiving means (13), presses outwardly in the radial direction against said inner clamping face (8e) of the hollow shaft body (8b) of said hollow shaft taper (8) when said first tightening element (10) is in the first position.

10. The tool magazine according to any one of the preceding claims, **characterized in that**
said locking means (10, 11, 12, 16) of said first tool holder (6) further comprises a spring element (12) adapted to exert a restoring force from the second position toward the first position on said first tightening element (10).

## Revendications

1. Magasin à outils pour une machine-outil, comportant
un moyen de fixation de carquois à outils
une pluralité de carquois à outils (6) fixés sur le moyen de fixation de carquois à outils et destinés à recevoir et à verrouiller un cône d'outil respectif (8) sur le magasin à outils (2),
un dispositif de déverrouillage (7) pour déverrouiller un cône d'outil (8) reçu et verrouillé dans l'un des carquois à outils (6) dans une position de déverrouillage du magasin à outils (2), et
un dispositif de déplacement pour déplacer les carquois à outils (6) fixés sur le moyen de fixation de carquois à outils,
le dispositif de déplacement étant conçu pour déplacer un premier carquois à outils (6) qui est fixé sur le moyen de fixation de carquois à outils, dans une première direction perpendiculaire à la direction axiale du premier carquois à outils (6) jusque dans la position de déverrouillage ;
le premier carquois à outils (6) comprenant :
- un moyen de réception (13) pour recevoir un cône d'outil (8) en direction axiale du premier carquois à outils (6) sur un premier côté du premier carquois à outils (6),
- un moyen de verrouillage (10, 11, 12, 16) pour verrouiller le cône d'outil (8) reçu dans le moyen de réception (13) et
- un premier moyen de fixation (14) pour fixer le premier carquois à outils (6) sur le magasin à outils (2),
dans lequel le moyen de verrouillage (10, 11, 12, 16) comprend un premier élément de serrage (10) mobile dans la direction axiale, qui est conçu pour être déplacé depuis une première position en direction axiale jusque dans une seconde position, le cône d'outil (8) reçu dans le moyen de réception (13) étant verrouillé lorsque le premier élément de serrage (10) se trouve dans la première position, et le cône d'outil (8) reçu dans le moyen de réception (13) étant déverrouillé lorsque le premier élément de serrage (10) se trouve dans la seconde position, et
le premier élément de serrage (10) comprend une première portion de serrage (10a) qui fait saillie en direction axiale hors du premier carquois à outils (6) sur un second côté opposé au premier côté du premier carquois à outils (6) ; et
le dispositif de déverrouillage (7) comprenant :
- un second moyen de fixation (21, 22) pour fixer le dispositif de déverrouillage (7) sur le magasin à outils (2) dans la position de déverrouillage du magasin à outils (2), et
- un moyen de déverrouillage (18, 19) pour déverrouiller le cône d'outil (8) reçu et verrouillé dans le premier carquois à outils (6) lorsque le premier carquois à outils (6) se trouve dans la position de déverrouillage ;
dans lequel
le moyen de déverrouillage (18, 19) comprend un second élément de serrage (18) mobile dans la direction axiale du dispositif de déverrouillage (7), qui comprend une seconde portion de serrage (18a) qui est susceptible d'être amenée dans un état d'engagement avec la première portion de serrage (10a) du premier élément de serrage (10), état dans lequel la seconde portion de serrage (18a) est en engagement imperdable en direction axiale par coopération de formes avec la première portion de serrage (10a) du premier élément de serrage (10) lorsque le carquois à outils (6) se trouve dans la position de déverrouillage, et
le moyen de déverrouillage (18, 19) est conçu pour déverrouiller le cône d'outil (8) reçu dans le moyen de réception (13) lorsque la première portion de serrage (10a) et la seconde portion de serrage (18a) se trouvent dans l'état d'engagement du fait que le second élément de serrage (18) est piloté axialement et fait déplacer le premier élément de serrage (10) depuis la première position axiale jusque dans la seconde position axiale via la liaison axiale en coopération de formes ; et
la seconde portion de serrage (18a) est réalisée de manière à pouvoir être amenée dans l'état d'engagement avec la première portion de serrage (10a) par un mouvement relatif par rapport à la première portion de serrage (10a) dans une première direction perpendiculaire à la direction axiale lorsque le dispositif de déplacement déplace le premier carquois à outils (6) jusque dans la position de déverrouillage dans la première direction perpendiculaire à la direction axiale du premier carquois à outils (6).

2. Magasin à outils selon la revendication 1, **caractérisé en ce que**
la première portion de serrage (10a) du premier carquois à outils (6) comprend une tête de serrage (10c) côté extrémité qui est réalisée pour venir en engagement imperdable en direction axiale par coopération de formes avec la seconde portion de serrage (18a) lorsque la première et seconde portions de serrage (10a, 18a) se trouvent dans l'état d'engagement.

3. Magasin à outils selon la revendication 1 ou 2, **caractérisé en ce que**
la première portion de serrage (10a) du premier carquois à outils (6) comprend un profil en forme de T ou un profil en forme de L en direction axiale.

4. Magasin à outils selon l'une des revendications précédentes, **caractérisé en ce que**
le premier carquois à outils (6) comprend en outre une première portion d'arrêt (17a, 17b) qui est agencée sur le second côté du premier carquois à outils (6),
la portion d'arrêt comprenant un élément d'arrêt (17b) qui fait saillie du premier carquois à outils en direction axiale sur le second côté du premier carquois à outils (6).

5. Magasin à outils selon la revendication 4, **caractérisé en ce que** l'élément d'arrêt (17b) fait saillie du premier carquois à outils (6) plus loin que la première portion de serrage (10a).

6. Magasin à outils selon l'une des revendications précédentes, **caractérisé en ce que**
le premier moyen de fixation (14) du premier carquois à outils (6) est conçu pour fixer le premier carquois à outils (6) sur le magasin à outils (2) avec faculté de pivotement autour d'un axe agencé perpendiculairement à la direction axiale du premier carquois à outils (6).

7. Magasin à outils selon l'une des revendications précédentes, **caractérisé en ce que**
le moyen de verrouillage (10, 11, 12, 16) du premier carquois à outils (6) comprend en outre un élément de retenue (11) qui retient un élément de verrouillage (16) radialement mobile,
dans lequel
le premier élément de serrage (10) du premier carquois à outils (6) force l'élément de verrouillage (16) en direction radiale jusque dans une position de serrage dans laquelle l'élément de verrouillage (16) destiné à verrouiller le cône d'outil (8) appuie sur une surface de serrage (8e) du cône d'outil (8) reçu dans le moyen de réception (13) lorsque le premier élément de serrage (10) se trouve dans la première position.

8. Magasin à outils selon la revendication 7, **caractérisé en ce que** l'élément de verrouillage (16) du premier carquois à outils (6) est mobile en direction radiale entre la position de serrage et une position de desserrage lorsque le premier élément de serrage se trouve dans la seconde position, et dans la position de desserrage l'élément de verrouillage (16) n'est pas en contact avec la surface de serrage (8e) du cône d'outil (8) du premier carquois à outils (6).

9. Magasin à outils selon la revendication 7 ou 8, **caractérisé en ce que**
le moyen de réception (13) du premier carquois à outils (6) est conçu pour recevoir un cône d'outil (8) réalisé sous forme de cône raide normalisé qui comprend un piston de serrage (8c) côté extrémité,
dans lequel
le premier élément de serrage (10) force l'élément de verrouillage (16) en direction radiale vers l'intérieur jusque dans la position de serrage dans laquelle l'élément de verrouillage (16) appuie en direction radiale vers l'intérieur contre la surface de serrage (8e) du piston de serrage (8c) du cône raide normalisé (8d) en vue de verrouiller le cône (8) reçu dans le moyen de réception (13), lorsque le premier élément de serrage (10) se trouve dans la première position ; ou
le moyen de réception (13) du premier carquois à outils (6) est conçu pour recevoir un cône d'outil (8) réalisé sous forme de cône à tige creuse qui présente une surface de serrage côté intérieur (8e) à l'intérieur de la tige creuse (8b) du cône à tige creuse (8),
et le premier élément de serrage (10) force l'élément de verrouillage (16) en direction radiale vers l'extérieur jusque dans la position de serrage dans laquelle l'élément de verrouillage (16) appuie en direction radiale vers l'extérieur contre la surface de serrage côté intérieur (8e) du corps à tige creuse (8b) du cône à tige creuse (8) pour verrouiller le cône à tige creuse (8) reçu dans le moyen de réception (13), lorsque le premier élément de serrage (10) se trouve dans la première position.

10. Magasin à outils selon l'une des revendications précédentes, **caractérisé en ce que**
le moyen de verrouillage (10, 11, 12, 16) du premier carquois à outils (6) comprend en outre un élément élastique (12) qui est conçu pour exercer une force de rappel sur le premier élément de serrage (10) depuis la seconde position vers la première position.
